# EUROPÄISCHE PATENTSCHRIFT

(11) **EP 1 084 997 B1**
(45) Veröffentlichungstag und Bekanntmachung des Hinweises auf die Patenterteilung: **09.11.2011**
(21) Anmeldenummer: 00119867.0
(22) Anmeldetag: 13.09.2000
(51) Int. Cl.: C04B 35/80, C04B 35/573

(54) **Mit Faserbündeln verstärkter Verbundwerkstoff mit keramischen Matrix**
Ceramic matrix composite reinforced with fibre bundles
Matériau composite à matrice céramique renforcé par des faisceaux de fibres

(30) Priorität: 16.09.1999 DE 19944345
(43) Veröffentlichungstag der Anmeldung: 21.03.2001
(73) Patentinhaber: AUDI AG, 85045 Ingolstadt (DE)
(72) Erfinder: Gruber, Udo, Dipl.-Ing., 86356 Neusäss (DE); Heine, Michael, Dipl.-Chem. Dr., 86695 Allmannshofen (DE); Kienzle, Andreas, Dipl.-Chem. Dr.rer.nat., 86672 Thierhaupten (DE)
(74) Vertreter: Deckers, Hellmuth Alexander

(56) Entgegenhaltungen:
- EP-A- 0 402 915
- WO-A-99/41069
- US-A- 4 457 967
- US-A- 4 849 382
- US-A- 5 202 293
- US-A- 5 531 943

## Beschreibung

Die vorliegende Erfindung betrifft einen neuen mit Faserbündeln verstärkten Verbundwerkstoff mit einer keramischen Matrix sowie Verfahren zu dessen Herstellung und seine Verwendung.

Mit hochtemperaturbeständigen Fasern und/oder Faserbündeln verstärkte Verbundwerkstoffe mit keramischer Matrix sind seit etwa 10 Jahren bekannt und werden in vielen Anwendungsfällen eingesetzt, wo extrem hohe Anforderungen an einen Werkstoff gestellt werden, wie hohe Temperaturbeständigkeit und gleichzeitige Festigkeit und Duktilität.

Das Maß, in dem die mit Fasern und/oder Faserbündeln verstärkten Verbundwerkstoffe mit keramischer Matrix, im folgenden kurz CMC-Verbundwerkstoffe genannt, im Bereich der Anwendungen mit hohen Temperaturanforderungen eingesetzt werden können, hängt nicht zuletzt von der Struktur der Matrix der Verbundwerkstoffe ab. Solange die Matrix der Verbundwerkstoffe aus verschiedenen Phasen zusammengesetzt ist, kann die Matrixstruktur an der Oberfläche der CMC- Verbundwerkstoffe durch ein Herauslösen einer Matrixphase, die bei niedrigeren Temperaturen schmilzt und durch chemische Prozesse wie Oxidation angegriffen werden kann, geschädigt werden, wodurch die Einsatzzeit der CMC-Verbundwerkstoffe heutzutage begrenzt ist. Diese Probleme werden umso größer, wenn ein CMC-Werkstoff zusätzlich einem mechanischen Verschleiß ausgesetzt ist. Hierbei werden immer neue schon bei niedrigeren Temperaturen angreifbare Kristallite der Matrix freigesetzt, die sehr schnell abgebaut werden. Außerdem bieten die durch die herausgelösten Kristallite entstandenen Lücken im Matrixverbund eine Möglichkeit zu einem erhöhten mechanischen Angriff. Weiterhin spielt bei einer mechanischen Beanspruchung von CMC-Werkstoffen auch die Struktur der Matrix in bezug auf Risse eine Rolle, da bei einer Matrix mit Rissen auch auf mechanischem Wege wesentlich leichter Matrixbestandteile aus dem Verbundwerkstoff herausgerissen werden können.

Anwendungsgebiete von CMC-Verbundwerkstoffen, bei denen die mechanische Beanspruchung eine wesentliche Rolle spielt, sind zum Beispiel die Anwendung von CMC-Elementen als Gleitlagerkomponenten und Reibbeläge, wie Bremsscheiben und Bremsbeläge. Zunächst wurden im Bereich der Reibbeläge vor allem mit Kohlenstoffasern verstärkte Verbundwerkstoffe mit Kohlenstoffmatrix, sogenannte CFC-Verbundwerkstoffe, eingesetzt. Diese wiesen jedoch den Nachteil einer nur unzureichenden Temperaturbeständigkeit des Werkstoffs gegen einen Oxidationsangriff auf. Daher ist man inzwischen bemüht, die Kohlenstoffmatrix des Verbundwerkstoffs durch eine oxidationsbeständigere Matrix zu ersetzen. Hierbei wird vor allem mit der gegen Oxidation bei wesentlich höheren Temperaturen (1500 °C) beständigen SiC-Matrix mit und ohne zusätzlicher Oberflächenschutzschicht gearbeitet, so daß heute vor allem der Einsatz von mit Kohlenstoffasern verstärkten Verbundwerkstoffen mit SiC-Matrix, im weiteren C/SiC-Verbundwerkstoffe genannt, für Reibbeläge wie Bremsscheiben und Bremsbeläge vorgesehen ist.

Es gibt inzwischen eine Reihe von Verfahren, C/SiC-Verbundwerkstoffe herzustellen, insbesondere auch mit der Absicht, sie als Komponenten von Bremssystemen einzusetzen. So werden in DE 197 10 105 und DE 197 11 829 Verfahren zur Herstellung von C/SiC-Verbundwerkstoffen beschrieben, bei denen mit mindestens einer Kohlenstoffschicht bzw. mit einer verfestigten Bindemittelschicht versehene Faserbündel mit kohlenstoffhaltigen Bindern mit oder ohne weitere Füllstoffe vermischt werden, danach die Mischungen verpreßt und ausgehärtet werden, bevor sie carbonisiert, evtl. graphitiert und abschließend mit flüssigem Silicium infiltriert werden.

Ein abgewandeltes Verfahren zur Herstellung von C/SiC-Verbundwerkstoffen wird in DE 197 49 462 beschrieben. Hier wird eine Gewebevorform aus Kohlenstoffasern zunächst mit einem Harz infiltriert und anschließend ausgehärtet. Der so entstandene Grünkörper wird dann wie bei den anderen Verfahren bereits beschrieben carbonisiert und mit flüssigem Silicium infiltriert.

Alle bisher nach den obigen Verfahren hergestellten C/SiC-Verbundwerkstoffe weisen eine inhomogene Struktur der Matrix auf, die im Falle der Verfahren nach DE 197 10 105 und DE 197 11 829 sich zum einen dahingehend äußert, daß die Matrix große Risse aufweist, die zwischen den einzelnen Fasern und/oder Faserbündeln des Verbundwerkstoffes verlaufen. Ursache hierfür sind die deutlich unterschiedlichen thermischen Ausdehnungskoeffizienten der Kohlenstoffasern und des gebildeten SiC der Matrix, wodurch sich beim Abkühlen der silicierten Proben Verspannungen in der Matrix bilden, die in den Rissen relaxieren (Werkstoffwoche '98, Band VII, S. 551). Außerdem weist die Matrix auch Phasen von reinem Kohlenstoff und/oder Silicium auf und damit keine homogene Zusammensetzung der Matrix. Die Kohlenstoffbereiche oxidieren bei höherer Temperaturbeanspruchung, d.h. brennen aus dem Verbundwerkstoff aus, und die Siliciumbereiche schmelzen bereits bei einer Temperatur von ca. 1400 °C. Damit ist es mit diesen Verfahren bisher nicht gelungen, eine Matrixstruktur der C/SiC-Verbundwerkstoffe zu erreichen, die geeignet ist, dauerhaften Temperaturbelastungen bei hohen Temperaturen standzuhalten, insbesondere nicht bei zusätzlicher mechanischer Belastung.

Auch nach dem Verfahren DE 197 49 462 hergestellte C/SiC-Verbundwerkstoffe weisen keine homogene Matrix auf. Bei diesem Herstellungsverfahren werden bewußt in der Matrix bereits während des Carbonisierungsprozesses große Risse erzeugt. Diese werden dann beim abschließenden Silicieren mit flüssigem Silicium gefüllt, das mit der Kohlenstoffmatrix zu SiC reagiert. Es bleiben jedoch nicht durchreagierte Kohlenstoffbereiche in der Matrix und die Struktur der Risse in der Matrix erhalten.

Mit diesen üblicherweise angewandten Verfahren zur Herstellung von C/SiC-Verbundwerkstoffen ist es also bisher nicht möglich einen C/SiC-Verbundwerkstoff herzustellen, der einen möglichst geringen Anteil der Silicium- und Kohlenstoffphase aufweist und möglichst keine Rißstruktur oder eine Rißstruktur, die sich bei mechanischer Beanspruchung nicht negativ auswirkt. Erreicht werden kann ein C/SiC-Verbundwerkstoff mit einem möglichst geringen Anteil an der Silicium- und Kohlenstoffphase jedoch mit einem anderen Verfahren. Bei diesem Verfahren gemäß DE 197 36 560 wird Siliciumcarbidpulver, das einen Feinkornanteil mit einer mittleren Korngröße von höchstens 2 µm und einen Grobkornanteil mit einer mittleren Korngröße zwischen 1,5 µm und 30 µm aufweist, mit den Verstärkungsfasern gemischt, dann verformt und anschließend gesintert. Da hierbei ein offenporiger C/SiC-Verbundwerkstoffkörper entsteht, ist dieser anschließend mit einer carbonisierbaren Substanz zu infiltrieren, danach zu carbonisieren und abschließend wie üblich mit flüssigem Silicium zu infiltrieren und silicieren. Dieses Herstellungsverfahren führt zwar zum Ziel einer verbesserten Matrix, besitzt aber gegenüber den anderen Verfahren den Nachteil, noch nach der ersten Bildung einer SiC-Matrix einen weiteren Infiltrationsschritt mit einem kohlenstoffspendenden Material und eine anschließende Silicierung zu benötigen, wodurch eine wirtschaftliche Produktion von C/SiC-Verbundwerkstoffen durch das Verfahren nicht mehr gegeben ist. Außerdem wird das Problem der Rißstruktur mit diesem Verfahren nicht gelöst.

In der Anmeldung WO 99/41069 wird ein Verfahren zur Herstellung eines Faserverbundwerkstoffs beschrieben, bei dem Preßmassen mit Fasern unterschiedlicher Qualität und in unterschiedlichen Anteilen eingesetzt werden; und der so hergestellte Preßkörper pyrolysiert und mit flüssigem Silicium infiltriert wird.

In der Anmeldung EP 0 915 070 A2 ist ein Verfahren zur Herstellung von mit Kohlenstoff-Fasern verstärkten keramisierten Formkörpern beschrieben, bei dem in eine diese Fasern enthaltende poröse Vorform ein Polymerharz infiltriert und gehärtet wird, der erhaltene Grünkörper pyrolysiert wird zur Umwandlung des Harzes in Kohlenstoff, und der so erhaltene Körper mit Silicium bei mindestens 1400 °C infiltriert wird, wobei der Kohlenstoff zu Siliciumcarbid reagiert.

Der Erfindung liegt daher die Aufgabe zugrunde, faserbündelverstärkte Verbundwerkstoffe mit keramischer Matrix zur Verfügung zu stellen, die eine gegenüber dem Stand der Technik verbesserte Matrix mit möglichst homogener Phasenzusammensetzung und höchstens noch feinen Rißstruktur besitzen sollen und nach den bisher bereits verwandten Verfahren hergestellt werden können.

Die obige Aufgabe wird durch den kennzeichnenden Teil der Patentansprüche 1 und 23 gelöst.

Der erfindungsgemäße faserbündelverstärkte Verbundwerkstoff mit keramischer Matrix ist **dadurch gekennzeichnet, daß** er Faserbündel beinhaltet, die aus zwei verschiedenen Anteilen bestehen, die eine unterschiedliche mittlere Faserbündellänge aufweisen, wobei diese beiden Faserbündelanteile in der Gesamtfaserbündelverteilung der Masse der Faserbündel des Verbundwerkstoffs bezüglich der Faserbündellänge durch ein Minimum der Faserbündelverteilung getrennt werden.

Damit beinhaltet der CMC-Verbundwerkstoff zum einen einen Anteil an Faserbündeln, die eine mindestens im Mittel signifikant größere Faserbündellänge aufweisen als die des anderen Faserbündelanteils.

Die erfindungsgemäßen Verbundwerkstoffe weisen als wesentliche Verstärkungselemente der Matrix Faserbündel auf, das heißt Bündel aus Einzelfasern. Einzelfasern dagegen sind höchstens in dem Maße im Verbundwerkstoff vorhanden, daß sie nicht wesentlich zur Verstärkung des Verbundwerkstoffes beitragen.

Die Wirkung der Faserbündel des Faserbündelanteils mit der größeren Faserbündellänge in der erfindungsgemäßen Verbundwerkstoffen entspricht der verstärkenden und duktilisierenden Wirkung von Faserbündeln in CMC-Werkstoffen, wie sie bereits gemäß dem Stand der Technik bei CMC-Werkstoffen bekannt ist. Der Faserbündelanteil wird deshalb im folgenden als Verstärkungsfaserbündelanteil bezeichnet.

Die Wirkung des zweiten Faserbündelanteils, der sich von dem Verstärkungsfaserbündelanteil mindestens durch eine wesentlich geringere mittlere Faserbündellänge unterscheidet, war jedoch überraschend. Anders als beim Verstärkungsfaserbündelanteil wirkt dieser Anteil nicht nur verstärkend im herkömmlichen Sinn des Standes der Technik. Vielmehr nimmt dieser Faserbündelanteil mit geringerer mittlerer Faserbündellänge, im folgenden Matrixfaserbündelanteil genannt, auch Einfluß auf die Struktur des CMC-Verbundwerkstoffs, indem er zu einer homogenen Matrixstruktur führt, die sich durch weniger und kleinere Risse in der Matrix und eine gleichmäßige Verteilung der verschiedenen Stoffkomponenten der Matrix auszeichnet, so daß andere Phasen als die beabsichtigte in der Matrixzusammensetzung nur noch in sehr geringem Umfang auftreten.

Durch die wesentlich geringere Länge und zumeist auch geringere Dicke und Höhe der Faserbündel des Matrixfaserbündelanteils gegenüber der Länge und den übrigen Abmessungen des Verstärkungsfaserbündelanteils können sich die Matrixfaserbündel frei im Gefüge der Verstärkungsfaserbündel anordnen und insbesondere den Raum zwischen den Verstärkungsfaserbündeln gut ausfüllen. Dies resultiert in einer gesteigerten Dichte der erfindungsgemäßen CMC-Verbundwerkstoffe und in einer Matrixstruktur, die wesentlich homogener wird, da ein wesentlich feineres Porensystem das Faserbündelgerüst der erfindungsgemäßen Verbundwerkstoffe vor dem Silicieren durchzieht als bisher aus dem Stand der Technik bekannt. Weiterhin beeinflussen die geometrisch kleineren Matrixfaserbündel auch die Rißbildung in der Matrix, da die Anbindung der Matrix an die Matrixfaserbündel nicht zu den gleichen Verspannungen in der Matrix führt als bei den Verstärkungsfaserbündeln. Zwar liegt in beiden Fällen ein unterschiedlicher thermischer Ausdehnungskoeffizient zwischen Matrix und Faserbündeln vor, bei den Matrixfaserbündeln bildet sich jedoch bei einer Temperaturänderung des Systems Faserbündel/Matrix auch in den Matrixfaserbündeln eine Verspannung aus, was bei den großen starren Verstärkungsfaserbündeln nicht erfolgt. Dementsprechend wird in der Matrix durch die eingebrachten Matrixfaserbündel der Spannungsgehalt reduziert, wodurch die Matrix der erfindungsgemäßen CMC-Verbundwerkstoffe ein Rißsystem mit weniger und kleineren Rissen aufweist. Verstärkt wird dieser Effekt durch die Tatsache, daß beim Durchreagieren der Matrix mit den Faserbündeln besonders die in ihren Abmessungen kleineren Matrixfaserbündel angegriffen werden, wodurch sie an Substanz verlieren, so daß ihre verminderte Restsubstanz verstärkt Verspannungen aufgrund der unterschiedlichen thermischen Ausdehnung von Faserbündeln und Matrix aufnimmt.

Weiterhin betrifft die Erfindung auch Herstellungsverfahren von faserbündelverstärkten Verbundwerkstoffen mit keramischer Matrix, bei denen zwei verschiedene Anteile an Faserbündeln, ein Verstärkungsfaserbündelanteil und ein Matrixfaserbündelanteil mit unterschiedlicher mittlerer Faserbündellänge im Herstellungsprozeß als Ausgangsstoffe angewendet werden, wobei die beiden Faserbündelanteile in der Gesamtfaserbündelverteilung der Masse der im Herstellungsprozeß eingebrachten Faserbündel des Verbundwerkstoffs bezüglich der Faserbündellänge durch ein Minimum der Faserbündelverteilung zwischen den mittleren Faserbündellängen des Matrix- und Verstärkungsfaserbündelanteils getrennt werden.

Es zeichnet die Erfindung aus, daß die bisher bekannten Verfahren zur Herstellung von CMC-Verbundwerkstoffen zur Herstellung der erfindungsgemäßen Verbundwerkstoffe eingesetzt werden können, wenn sie wie oben beschrieben statt bisher nur einem Faser- bzw. Faserbündelanteil einen Verstärkungsfaserbündelanteil und einen Matrixfaserbündelanteil in die Verbundwerkstoffe einbringen. Auf diese Weise werden nur durch die veränderten Rohstoffe die erfindungsgemäßen CMC-Verbundwerkstoffe hergestellt, ohne daß die ansonsten bekannten Vorteile der bisherigen Herstellungsverfahren ins Hintertreffen geraten.

Die Faserbündel, die die erfindungsgemäßen CMC-Verbundwerkstoffe beinhalten oder die im erfindungsgemäßen Verfahren zur Herstellung von CMC-Verbundwerkstoffen eingesetzt werden, weisen vorteilhafterweise eine Schutzschicht auf, um sie vor einem zu starken Angriff beim Reagieren mit dem Matrixsystem zu schützen, damit sie ihre Verstärkungseigenschaften nicht verlieren. Ein weiterhin verbesserter Schutz der in den erfindungsgemäßen CMC-Verbundwerkstoffen eingebundenen Faserbündel kann durch mehrere womöglich verschiedene Schutzschichten übereinander erreicht werden. Die bevorzugt benutzten Schutzschichten bestehen aus Kohlenstoff, Graphit, Pyrokohlenstoff, TiC, TiN, SiC, Titandiborid, Zirkoniumdiborid, Hafniumdiborid, Verbindungen auf der Basis von Si,B,C,N und Mischungen davon. Ein anderer oder zusätzlicher Faserbündelschutz kann dadurch erreicht werden, daß bei der Herstellung eingebrachten Faserbündel mindestens mit einer Schicht eines pyrolysierbaren Bindemittels beschichtet sind, das verfestigt oder ausgehärtet wurde. Insbesondere können derart beschichtete Faserbündel auch in den erfindungsgemäßen Herstellungsverfahren verwendet werden. Die Schutzschicht wird während der Herstellung der erfindungsgemäßen CMC-Verbundwerkstoffe pyrolysiert.

Zur Verstärkung der erfindungsgemäßen CMC-Verbundwerkstoffe und bei den erfindungsgemäßen Herstellungsverfahren können alle hochtemperaturbeständigen Fasern, insbesondere jedoch Kohlenstoffasern, Graphitfasern, SiC- Fasern, Aluminiumoxidfasern, Al₂O₃SiO₂ -Fasern, Al₂O₃SiO₂B₂O₃-Fasern, carbonisierte Formen von Cellulose-fasern, Holzfasern und anderen organischen Fasern, sowie hochwarmfesten Fasern auf der Basis von Verbindungen, die Si,C,B,N,Al enthalten, verwendet werden. Ebenso können statt der in den Faserbündeln enthaltenen Fasern auch Nanofasern, Whisker und Nanoröhrchen zur Verstärkung der CMC-Verbundwerkstoffe und bei deren Herstellung benutzt werden.

Die keramische Matrix der erfindungsgemäßen CMC-Verbundwerkstoffe weist bevorzugt mindestens eine Phase von mindestens einem der Stoffe Kohlenstoff, Silicium, Bor, Aluminium, Zirkonium, und/oder der Legierungen aus der Gruppe Siliciumcarbid, Siliciumnitrid, Siliciumoxid, Bornitrid, Borcarbid, SiBCN, Al₂O₃, ZrO₂, TiC, Eisensilicide und anderer Silicide sowie Glaskeramiken auf. Besonders bevorzugt weisen die erfindungsgemäßen Verbundwerkstoffe eine Matrix aus nahezu nur einem der oben genannten Stoffe und Legierungen auf und nur sehr wenig Bereiche mit einer der Hauptphase naheliegenden Verbindung. D.h., daß bei einer Legierung als Matrix nur geringe Anteile der Phasen der einzelnen Legierungsbestandteile in der Matrix vorhanden sind. Weiterhin kann die keramische Matrix der erfindungsgemäßen CMC-Verbundwerkstoffe auch Zusätze von Eisen, Chrom, Titan, Molybdän, Nickel oder Aluminium beinhalten.

CMC-Verbundwerkstoffe, die heute schon für technische Aufgaben hoher Anforderungen eingesetzt werden, beinhalten bevorzugt Kohlenstoff- und Graphitfasern, da diese in großtechnischen Maßstäben verfügbar sind. Sie werden zumeist auf der Basis von PAN-Fasern, Pechfasern, Mesophasenpech, Viscosefasern, Phenolfasern, Polyphenylenfasern und Hohlfasern durch Pyrolyse hergestellt. Daher sind auch erfindungsgemäße CMC-Verbundwerkstoffe bevorzugt mit Kohlenstoff- oder Graphitfaserbündeln verstärkt, bzw. in den erfindungsgemäßen Herstellungsverfahren bevorzugt Kohlenstoff- und Graphitfaserbündel zu verwenden.

Die erfindungsgemäßen CMC-Verbundwerkstoffe zeigen ihre Eigenschaften besonders ausgeprägt als C/SiC-Verbundwerkstoffe, also Werkstoffe, deren keramische Matrix im wesentlichen Phasen von Silicium, Kohlenstoff und Silicumcarbid beinhaltet.

Zur Herstellung der in die erfindungsgemäßen CMC-Verbundwerkstoffe eingebrachten Faserbündelanteile sind verschiedene Möglichkeiten vorhanden. Eine Möglichkeit besteht darin, frische Faserbündel mit oder ohne Schutzschicht in einer Schneideanlage auf definierte Längen zurechtzuschneiden. In diesem Fall setzt sich die Längenverteilung der Faserbündel im Verbundwerkstoff nahezu aus diskreten Längen zusammen, die zusammengestellt werden können. In diesem wie auch in anderen Fällen ist es möglich, den Matrix- und/oder Verstärkungsfaserbündelanteil aus verschiedenen Faserbündelanteilen zusammenzusetzen. Es zeichnet die Erfindung jedoch aus, daß die mittlere Faserbündellänge beider Anteile deutlich voneinander verschieden ist.

Ein anderer Weg, Faserbündel für die einzelnen Faserbündelanteile herzustellen besteht darin, daß man einen Verbundwerkstoff, der die für die Herstellung des erfindungsgemäßen CMC- Verbundwerkstoffs benötigten Faserbündel bereits beinhaltet, durch Brech- und/oder Mahlvorgänge in ein Mahlgut unwandelt, das dann als Bestandteile Faserbündel aus dem zerstörten Verbundwerkstoff mit verschiedener Länge aufweist. Durch einen Klassiervorgang wie zum Beispiel Sieben kann das Mahlgut, die einzelnen Faserbündel, dann in einzelne Fraktionen zerlegt werden, die sich in ihren Abmessungen und dabei insbesondere der Faserbündellänge unterscheiden. Diese so enstandenen Faserbündelfraktionen verschiedener Längenverteilungen können dann als Matrix- und/oder Verstärkungsfaserbündelanteil zur Herstellung erfindungsgemäßer Verbundwerkstoffe benutzt werden. Bei dem Klassieren und insbesondere Sieben des Mahlguts ist es immer möglich, daß die einzelnen Faserbündelfraktionen neben ihren Faserbündeln der vorgesehenen Faserbündellänge auch einen Anteil überlanger Faserbündel, das heißt mit wesentlich größerer Faserbündellänge als für die Fraktion beabsichtigt, beinhalten, da solche Faserbündel bei entsprechendem Querschnitt z.T. auch ihrer Länge nach durch z.B. ein Sieb gelangen können. Da diese überlangen Faserbündel keinen wesentlichen Einfluß auf die Herstellung der erfindungsgemäßen CMC-Werkstoffe haben, können sie mit in die erfindungsgemäßen Herstellungsverfahren eingebracht werden. Somit kann die Faserbündelverteilung eines erfindungsgemäßen CMC-Verbundwerkstoffs neben dem Matrix-und dem Verstärkungsfaserbündelanteil auch noch einen kleineren Anteil überlanger Faserbündel aufweisen.

Die erfindungsgemäßen CMC-Verbundwerkstoffe zeichnen sich durch eine spezielle Auswahl der Verteilung der geometrischen Abmessungen der in ihnen enthaltenen Faserbündel gegenüber den CMC-Verbundwerkstoffen gemäß dem Stand der Technik aus. Ebenso verbessern die erfindunggemäßen Herstellungsverfahren die Herstellung von CMC-Verbundwerkstoffen dadurch, daß die Verteilung der geometrischen Abmessungen der im Verfahren eingebrachten Faserbündel einer Auswahl unterliegt.

Diese ausgewählten Verteilungen sollen im folgenden und den Ansprüchen durch sogenannte Faserbündelverteilungen beschrieben werden. Hierunter ist im weiteren die Massenverteilung der Faserbündel bezogen auf die Länge der Faserbündel zu verstehen, d.h., der Verteilung ist zu entnehmen, welche Masse die Faserbündel einer bestimmten Faserbündellänge besitzen bzw. welchen Massenanteil die Faserbündel einer bestimmten Faserbündellänge an der gesamten Masse der Faserbündel besitzen.

Die Faserbündelverteilungen der erfindungsgemäßen CMC-Verbundwerkstoffe und der dazugehörigen Herstellungsverfahren, kurz erfindungsgemäßen Faserbündelverteilungen, zeichnen sich insbesondere durch folgende Eigenschaften aus:

Die mittlere Faserbündellänge des Verstärkungsfaserbündelanteils liegt üblicherweise zwischen 4 mm und 20 mm, bevorzugt zwischen 5 mm und 16 mm und besonders bevorzugt zwischen 6 mm und 12 mm. Die Halbwertsbreite der Faserbündellängenverteilung des Verstärkungsfaserbündelanteils liegt üblicherweise zwischen 0,01 mm und 15 mm, bevorzugt zwischen 0,1 mm und 12 mm und besonders bevorzugt zwischen 1 mm und 8 mm.

Die mittlere Faserbündellänge des Matrixfaserbündelanteils liegt üblicherweise zwischen 0,2 mm und 5 mm, bevorzugt zwischen 0,5 mm und 4 mm und besonders bevorzugt zwischen 1 mm und 3,5 mm. Die Halbwertsbreite der Faserbündellängenverteilung des Matrixfaserbündelanteils liegt üblicherweise zwischen 0,01 mm und 5 mm, bevorzugt zwischen 0,1 mm und 4 mm und besonders bevorzugt zwischen 1 mm und 3,5 mm.

Die mittlere Faserbündelbreite des Verstärkungsfaserbündelanteils liegt üblicherweise zwischen 0,02 mm und 5 mm, bevorzugt zwischen 0,1 mm und 3 mm und besonders bevorzugt zwischen 0,5 mm und 2 mm. Die Halbwertsbreite der Faserbündelbreitenverteilung des Verstärkungsfaserbündelanteils liegt üblicherweise zwischen 0,05 mm und 10 mm, bevorzugt zwischen 0,1 mm und 7 mm und besonders bevorzugt zwischen 0,5 mm und 3 mm.

Die mittlere Faserbündelbreite des Matrixfaserbündelanteils liegt üblicherweise zwischen 0,02 mm und 2 mm, bevorzugt zwischen 0,1 mm und 1 mm und besonders bevorzugt zwischen 0,3 mm und 0,7 mm. Die Halbwertsbreite der Faserbündelbreitenverteilung des Matrixfaserbündelanteils liegt üblicherweise zwisehen 0,05 mm and 3 mm, bevorzugt zwischen 0,1 mm und 2 mm und besonders bevorzugt zwischen 0,5 mm und 1,5 mm.

Das Verhältnis der mittleren Faserbündellänge des Verstärkungsfaserbündelanteils zur mittleren Faserbündellänge des Matrixfaserbündelanteils beträgt bevorzugt zwischen 2,1 und 10.

Das Verhältnis der mittleren Faserbündellänge zur mittleren Faserbündelbreite des Verstärkungsfaserbündelanteils beträgt üblicherweise zwischen 2 und 100, bevorzugt zwischen 3 und 100 und besonders bevorzugt zwischen 4 und 20.

Das Verhältnis der mittleren Faserbündellänge zur mittleren Faserbündelbreite des Matrixfaserbündelanteils beträgt üblicherweise zwischen 2 und 100, bevorzugt zwischen 3 und 100 und besonders bevorzugt zwischen 4 und 20.

Eine weitere Größe, mit der oft die geometrischen Abmessungen von Faserbündeln beschrieben werden, ist das Länge/Breite/Höhe-Verhältnis (L/D/H-Verhältnis) der Faserbündel, in das die drei geometrischen Abmessungen der Faserbündel, Länge der Faserbündel, Breite der Faserbündel und Höhe der Faserbündel eingehen. Hierbei wird die Faserbündellänge zunächst durch die Faserbündelbreite geteilt und anschließend durch die Faserbündelhöhe.

Für die erfindungsgemäßen Faserbündelverteilungen lassen sich hierzu die folgenden Aussagen machen. Das mittlere Länge/Breite/Höhe-Verhältnis der Faserbündel des Verstärkungsfaserbündelanteils liegt üblicherweise zwischen 2 und 50.000, bevorzugt zwischen 5 und 2.000 und besonders bevorzugt zwischen 10 und 100, und das mittlere Länge/Breite/Höhe- Verhältnis der Faserbündel des Matrixfaserbündelanteils liegt üblicherweise zwischen 2 und 50.000, bevorzugt zwischen 10 und 5.000 und besonders bevorzugt zwischen 30 und 500.

Weiter zeichnen sich die erfindungsgemäßen Faserbündelverteilungen dadurch aus, daß das Verhältnis der Masse des Matrixfaserbündelanteils zur Gesamtmasse der Faserbündel bevorzugt zwischen 0,1 und 0,33 und besonders bevorzugt zwischen 0,2 und 0,33 liegt.

Die erfindungsgemäßen Herstellungsverfahren zur Herstellung von CMC-Verbundwerkstoffen beinhalten u.a. alle aus dem Stand der Technik bekannten Verfahren zur Herstellung von CMC-Verbundwerkstoffen, soweit die bei der Herstellung eingebrachten Faserbündel eine erfindungsgemäße Faserbündelverteilung aufweisen.

Eine bevorzugte Variante der Herstellungsverfahren beinhaltet in Anlehnung z.B. an die in DE 197 49 462 beschriebenen Verfahren, daß in einem ersten Schritt die zwei verschiedenen Anteile an Faserbündeln vermischt, anschließend verpreßt werden, und darauffolgend der so hergestellte Formling mit Polymeren, insbesondere pyrolysierbaren Polymeren, infiltriert wird. Hierbei können zusammen mit den Polymeren auch weitere Füllstoffe infiltriert werden.

Bei den meisten erfindungsgemäßen Herstellungsverfahren werden jedoch die zwei verschiedene Anteile an Faserbündeln während eines Mischungsprozesses anderen Komponenten zur Herstellung des Verbundwerkstoffs zugesetzt. Bevorzugt werden die zwei verschiedene Anteile an Faserbündeln während des Mischungsprozesses mit mindestens einem carbonisierbaren Bindemittel vermischt. Als Füllmittel werden außerdem vor allem Kohlenstoffpartikel, Ruß, Kokse, Graphit, Silicium, Carbide, Nitride, Eisensilicide und andere Silicide sowie Boride zugesetzt. Zusätzlich können während des Mischungsprozesses auch andere Bindemittel z.B. aus der Gruppe der Polyvinylalkohole, Methyl-, Ethyl- und Buthylcellulosen zugesetzt werden.

Bei den carbonisierbaren Bindemittel werden bevorzugt Bindemittel aus der Gruppe der Harze und Peche eingesetzt. Unter den Harzen werden vor allem Harze aus der Gruppe der Thermoplaste, Phenolharze, Furanharze, Polyacrylatharze, Polyimidharze, Cyanatharze und Epoxidharze benutzt. Als Peche werden vor allem Fest- und Flüssigpeche, Mesosphasenpeche, Steinkohlenteerpeche und Petrolpeche eingesetzt. Als carbonisierbare Bindemittel können aber z.B. auch Bindemittel aus der Gruppe der Polysilane, Polycarbosilane, Polysilazane, Mono- und Polysaccharide, Polyallylcarbodiimide, Öle und Teere eingesetzt werden.

Der Masseanteil der beim Mischprozeß eingebrachten Faserbündel beträgt üblicherweise insgesamt 50 bis 99 % der Gesamtmasse der Mischung, bevorzugt 60 bis 90 % und besonders bevorzugt 65 bis 80 % der Gesamtmasse der Mischung.

Der Masseanteil der beim Mischprozeß eingebrachten Faserbündel des Verstärkungsfaserbündelanteils beträgt üblicherweise 20 bis 80 % der Gesamtmasse der Mischung, bevorzugt 35 bis 65 % und besonders bevorzugt 42 bis 55 % der Gesamtmasse der Mischung.

Der Masseanteil der beim Mischprozeß eingebrachten Faserbündel des Matrixfaserbündelanteils beträgt üblicherweise 10 bis 40 % der Gesamtmasse der Mischung, bevorzugt 15 bis 35 % und besonders bevorzugt 20 bis 30 % der Gesamtmasse der Mischung.

Die durch Mischvorgang erhaltene Mischung wird zumeist anschließend verdichtet. Dieses Verdichten erfolgt bevorzugt in einer Gesenkpresse, isostatischen Presse, Stranggußpresse, Kolbenhubpresse oder einem Extruder, z.B. Schneckenextruder. Hierbei stellt der Fachmann den auf die Mischung wirkenden Druck mit seinem Wissen über Verdichtungsvorgänge so ein, daß er am Ende der Herstellungsverfahren zu den erfindungsgemäßen CMC-Verbundwerkstoffen gelangt. Dieses Verdichten der Mischung erfolgt bevorzugt bei erhöhter Temperatur, wenn Harze als Bindemittel in der Mischung vorhanden sind besonders bevorzugt bei Temperaturen oberhalb der Aushärtungstemperatur der Harzbinder. Es ist aber auch möglich, den verdichteten Formkörper erst anschließend einer Temperaturbehandlung zu unterziehen. So ist es bei Harzen als Bindemittel auch möglich, nach dem Verdichten den Formkörper einer Temperaturbehandlung oberhalb der Aushärtungstemperatur der Harzbinder zu unterziehen, um dadurch den Formkörper auszuhärten.

Bei erfindungsgemäßen Herstellungsverfahren zur Herstellung von CMC-Verbundwerkstoffe, deren Matrix Kohlenstoff und/oder Carbide beinhaltet, wie Z.B. C/SiC-Verbundwerkstoffen, werden zumeist in einem weiteren Verfahrensschritt die Bindemittel carbonisiert.

Weiterhin können die erfindungsgemäßen Herstellungsverfahren auch Verfahrensschritte beinhalten, bei denen ein ein- oder mehrfach mittels CVI-Prozeß oder Imprägnierung carbonisierbare Substanzen in das Porensystem des herzustellenden Verbundwerkstoffs eingebracht werden und der herzustellende Verbundwerkstoff anschließend einem Carbonisierungsschritt ausgesetzt wird. Bevorzugt werden diese Verfahrenschritte dann eingesetzt, wenn ein CMC-Verbundwerkstoff, dessen Matrix Kohlenstoff und/oder Carbide beinhaltet, hergestellt oder bei der Herstellung verdichtet werden soll.

An den oben beschriebenen Carbonisierungschritten der Verbundwerkstoffe kann sich als ein weiterer Verfahrenschritt die Graphitierung der carbonisierten Vorprodukte bei Temperaturen über 2000 °C anschließen.

Erfindungsgemäße Herstellungsverfahren von CMC-Verbundwerkstoffen, deren Matrix auch Silicum und/oder Silicide beinhaltet, wie z.B. C/SiC-Verbundwerkstoffe, beinhalten bevorzugt einen abschließenden Verfahrensschritt, indem eine Silicierung vorgenommen wird. Diese abschließende Silicierung kann durch die Infiltration von flüssigem Silicium oder Siliciumlegierungen aus der Gruppe der Eisen-, Chrom-, Titan-, Molybdän-, Nickel- und Aluminiumsilicide oder die CVI-Abscheidung von Silicium, Siliciumcarbid, oder anderen Siliciumverbindungen vorgenommen werden.

Eine weitere Ausführung der erfindungsgemäßen Herstellungsverfahren zur Herstellung von Verbundwerkstoffen mit SiC-Matrix, wie C/SiC-Verbundwerkstoffen, lehnt sich an die in DE 197 36 560 beschriebenen Verfahren an, wobei jedoch der eingebrachte Faserbündelanteil eine erfindungsgemäße Faserbündelverteilung aufweist.

Bei diesen Herstellungsverfahren werden die Faserbündel zunächst mit Kohlenstoff- und/ oder Siliciumcarbid- und/oder Molybdändisilicid- und/ oder Borcarbid- und/ oder Bornitrid- und/ oder Aluminiumnitrid- und/ oder Titancarbid-Pulver vermischt. Außerdem können der Mischung auch noch Lösungsmittel zugesetzt werden. Nach dem Mischen wird die Mischung dann verdichtet entsprechend den oben beschriebenen Verfahrensschritten. Der nach dem Verdichten entstandene Formkörper wird anschließend gesintert, dann mit carbonisierbaren Substanzen imprägniert und carbonisiert. Abschließend erfolgt dann auch hier ein Silicierungsschritt wie oben beschrieben.

Eingesetzt werden die erfindungsgemäßen CMC-Verbundwerkstoffe vor allem bei hohen Temperaturbelastungen, d.h., z.B. als Teile von Gasturbinen wie Turbinenrädern, Teile von Brennern, Düsen und Teile davon, Heißgasrohren, Meßsonden, Hüllrohre für Sonden, Thermalschutzkomponenten von Raumtransportern und Flugtriebwerken, Hitzeschilde, Trägerkomponenten für Spiegel, Antennen und Reflektoren, Flugkörperkomponenten, Feuerroste und Komponenten von Wärmetauschern. Das bevorzugte Einsatzgebiet der erfindungsgemäßen CMC-Verbundwerkstoffe liegt jedoch dort, wo zu den hohen Temperaturbelastungen auch noch eine mechanische Beanspruchung hinzukommt. Beispiele für derartige Anwendungen sind Reibstoffe wie Bremsscheiben und Bremsbeläge für Luftfahrzeuge, Schienenfahrzeuge und Kraftfahrzeuge und Komponenten von Gleitlagern und Gleitelementen.

### Zeichnungen

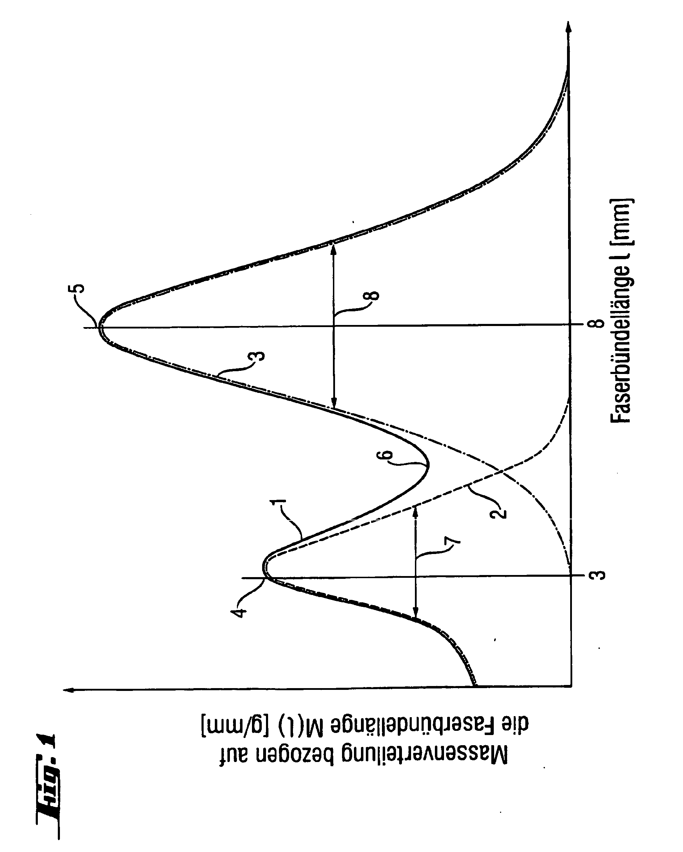

Fig. 1 zeigt exemplarisch eine Gesamtfaserbündelverteilung 1 eines erfindungsgemäßen CMC-Verbundwerkstoffs. Hierbei ist zu unterscheiden zwischen der Faserbündelverteilung 2 des Matrixfaserbündelanteils und der Faserbündelverteilung 3 des Verstärkungsfaserbündelanteils, wobei aus der Summe der Faserbündelverteilungen 2 und 3 die Gesamtfaserbündelverteilung resultiert. Man erkennt deutlich, daß die mittlere Faserbündellänge des Matrixfaserbündelanteils 4 deutlich von der des Verstärkungsfaserbündelanteils 5 verschieden ist, so daß die Gesamtfaserbündelverteilung 1 zwischen den mittleren Faserbündellängen 4 und 5 ein Minimum 6 aufweist. Die Faserbündelverteilung des einzelnen Faserbündelanteiles kann weiterhin u.a. durch die Halbwertsbreite der einzelnen Faserbündelverteilungen von Matrixfaserbündelanteil 7 und Verstärkungsfaserbündelanteil 8 charakterisiert werden.

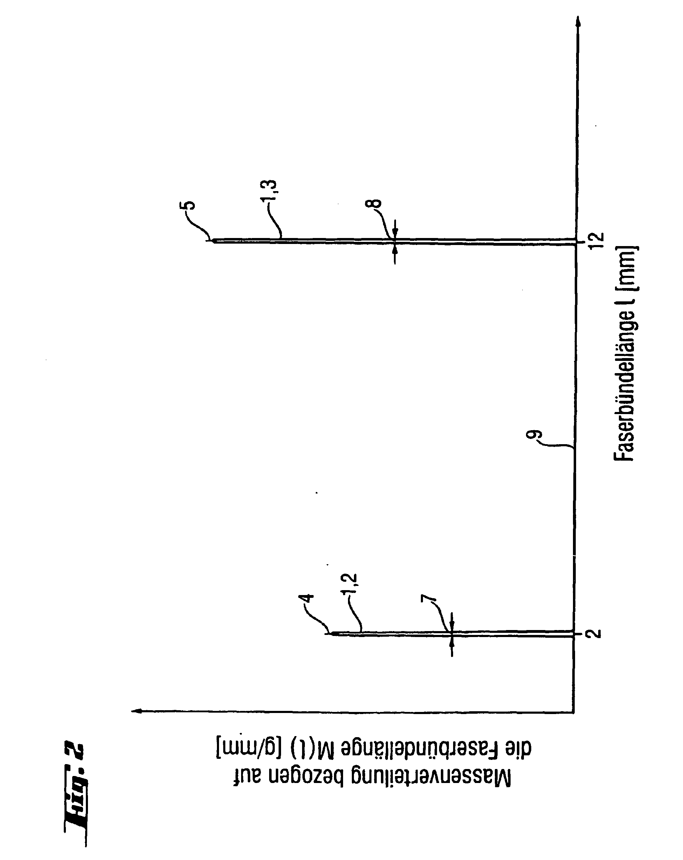

In Fig. 2 ist die Gesamtfaserbündelverteilung 1 eines anderen erfindungsgemäßen CMC-Verbundwerkstoffs gezeigt. Diese Faserbündelverteilung zeichnet sich dadurch aus, daß sowohl die Faserbündelverteilung des Matrixfaserbündelanteils 2 als auch die des Verstärkungsfaserbündelanteils 3 eine sehr geringe Halbwertsbreite 7 bzw. 8 aufweisen. Hieraus resultiert eine Lücke 9 in der Gesamtfaserbündelverteilung 1. Die hier gezeigte Faserbündelverteilung tritt zum Beispiel dann auf, wenn in den Herstellungsprozeß des CMC-Verbundwerkstoffs Faserbündel eingebracht werden, die auf definierte Längen für beide Faserbündelanteile zurechtgeschnitten wurden.

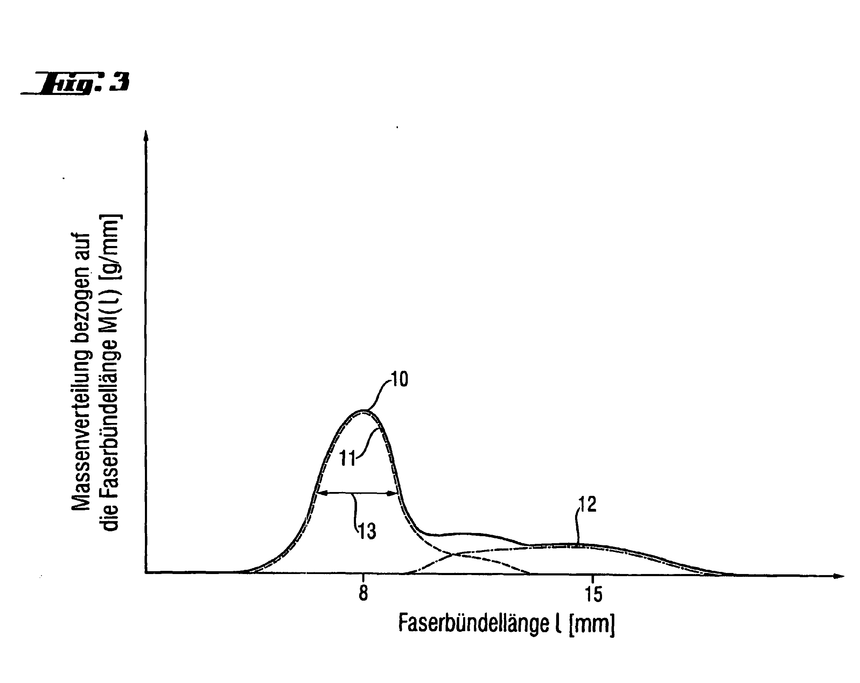

Fig. 3 zeigt die Gesamtfaserbündelverteilung 10 einer Siebfraktion, wie sie sich zum Beispiel ergibt, wenn ein C-Faserbündel beinhaltender Verbundwerkstoff gemahlen wurde und das Mahlgut in einer Siebanlage in einzelne Siebfraktionen getrennt wird. Beim Sieben gelangen nämlich nicht nur Faserbündel der für die Fraktion beabsichtigten Faserbündelverteilung 11 durch das Sieb, sondern es ist auch möglich, daß ein gewisser Anteil sehr langer Faserbündel in seiner Länge durch die Sieböffnungen gelangt, so lange es nur der Querschnitt der Faserbündel zuläßt. Hieraus ergibt sich ein Anteil überlanger Faserbündel in jeder Siebfraktion, dessen Verteilung 12 in Fig. 3 oberhalb der Verteilung der eigentlichen Siebfraktion 11 gezeigt ist. Beide Verteilungen 11 und 12 ergeben in der Summe die Gesamtfaserbündelverteilung einer Siebfraktion 10. Die Halbwertsbreite der Siebfraktion 13 wird jedoch durch den Anteil an überlangen Faserbündel nicht beeinflußt.

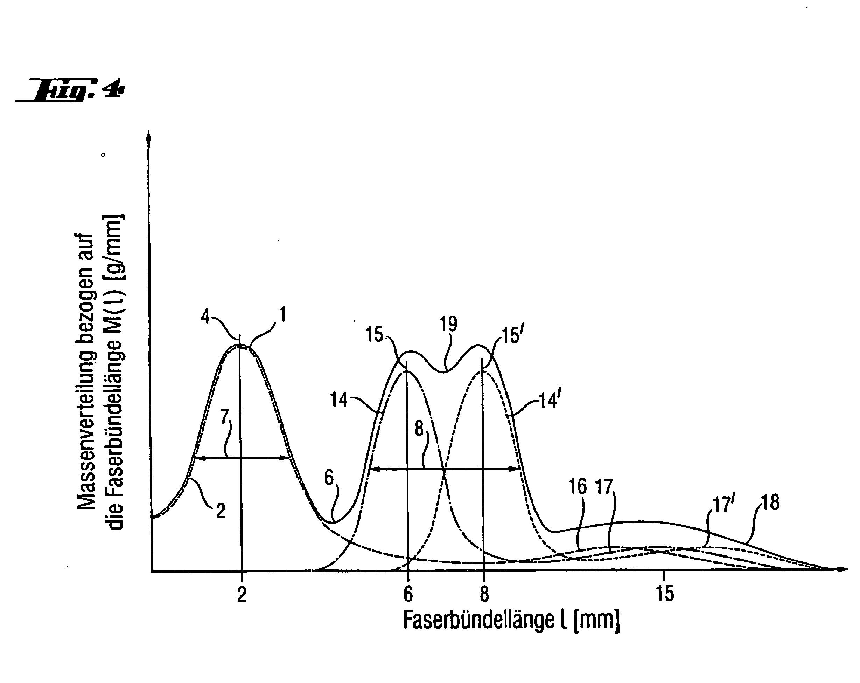

In Fig. 4 ist die Gesamtfaserbündelverteilung 1 eines weiteren erfindungsgemäßen CMC-Verbundwerkstoffs gezeigt. In diesem Beispiel setzen sich die Faserbündel des Verbundwerkstoffs aus einzelnen Siebfraktionen zusammen. Der Matrixfaserbündelanteil besteht aus einer Siebfraktion, deren Faserbündelverteilung 2 wiederum einen Extraanteil überlanger Faserbündel 16 aufweist. Der Verstärkungsfaserbündelanteil in diesem Beispiel ist aus zwei Siebfraktionen zusammengesetzt, deren Faserbündelverteilungen 14 und 14' in Fig. 4 einzeln dargestellt sind. Hierdurch weist die Gesamtfaserbündelverteilung 1 im Bereich des Verstärkungsfaserbündelanteils zwischen den Mittelwerten 15 und 15' der einzelnen Siebfraktionen ein kleines Minimum 19 auf. Dieses ist jedoch wesentlich geringer ausgeprägt als das Minimum 6 der Gesamtfaserbündelverteilung zwischen dem Matrix- und Verstärkungsfaserbündelanteil. Durch die Zusammensetzung des Verstärkungsfaserbündelanteils aus zwei Siebfraktionen weist die Faserbündelverteilung der Verstärkungsfaserbündel eine wesentliche größere Halbwertsbreite 8 als die der Matrixfaserbündelverteilung 7 auf. Weiterhin ist in dieser Verteilung noch charakteristisch, daß sich die Anteile der überlangen Faserbündel der einzelnen Siebfraktionen, d.h. der Anteil der Matrixfaserbündel 16 mit denen der einzelnen Siebfraktionen der Verstärkungsfaserbündel 17 und 17', zu einer Gesamtfaserbündelverteilung überlanger Faserbündel 18 im Verbundwerkstoff addieren.

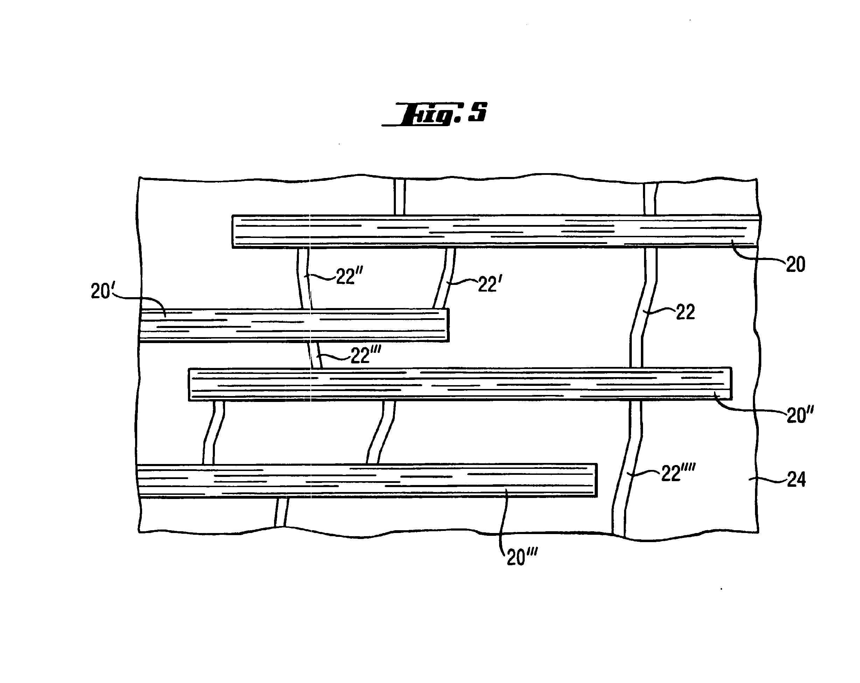

In Fig. 5 ist die Struktur eines CMC-Verbundwerkstoffes gemäß dem Stand der Technik schematisch dargestellt, wie sie zum Beispiel in einem Schliffbild zu beobachten ist. Dargestellt sind zum einen Faserbündel in dem Verbundwerkstoff 20, 20', 20" und 20 "', die der Einfachheit halber in diesem Beispiel unidirektional ausgerichtet sind, im allgemeinen jedoch auch jede andere Lage zueinander einnehmen können. Weiterhin zeigt die übrige Fläche des Ausschnitts die keramische Matrix 24 des Verbundwerkstoffs. Diese Matrix wird von breiten Rissen wie 22, 22',22",22"' und 22"" durchzogen, die von Faserbündel zu Faserbündel verlaufen und zumeist beim Abkühlen der Verbundwerkstoffe nach ihrer Herstellung entstehen, jedoch auch durch hohe thermische Belastungen der Werkstoffe hervorgerufen werden können. Die Ursache hierfür liegt, wie oben bereits erläutert, im unterschiedlichen thermischen Ausdehnungsverhalten von Faserbündel und Matrix, was bei thermischen Beanspruchungen zu Verspannungen in der Matrix führt, die dann durch die Rißbildung relaxieren.

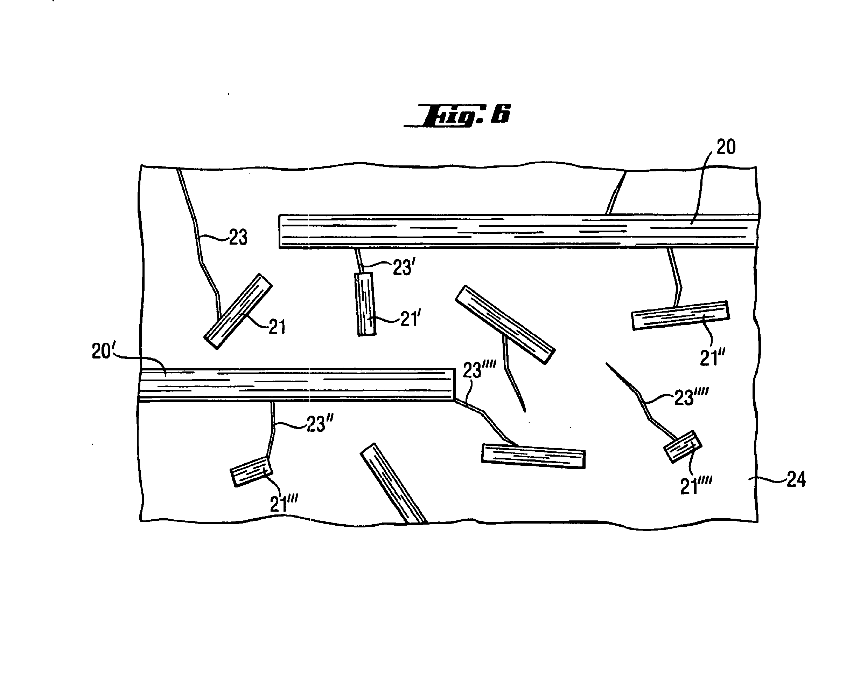

Fig. 6 zeigt die der Fig. 5 entsprechende Struktur eines erfindungsgemäßen CMC-Verbundwerkstoffes, wie sie zum Beispiel in einem Schliffbild zu beobachten ist, ebenfalls in schematischer Darstellung. Man erkennt, daß ein Teil der Verstärkungsfaserbündel 20, 20' durch kürzere und zumeist auch dünnere Matrixfaserbündel 21, 21',21",21"',21"" ersetzt wurde gegenüber dem Beispiel in Fig. 5. Die kürzeren Matrixfaserbündel können sich trotz der unidirektionalen Ausrichtungen der Verstärkungsfaserbündel in beliebiger Richtung zwischen den Verstärkungsfaserbündeln anordnen. Als weiteren wesentlichen Unterschied findet man, daß die Matrix 24 des erfindungsgemäßen CMC-Verbundwerkstoffs eine gänzlich andere Rißstruktur aufweist. Man findet nur wesentlich kleinere Risse 23, 23',23",23'",23"" in der Matrix in geringerem Umfang, wie die Struktur der entsprechenden CMC-Verbundwerkstoffe gemäß dem Stand der Technik, wie Fig. 5 zeigt, sie aufweist. Außerdem zeigen die Risse, z.B. 23, 23"" nicht so eine gleichmäßige Ausrichtung zwischen den Verstärkungsfaserbündeln wie in der Struktur von Fig. 5 gezeigt. Weiterhin ist zu beobachten, daß ein Teil der Risse, z.B. der Riß 23""' nicht von Faserbündel zu Faserbündel verläuft, sondern von einem Faserbündel; z.B. 21"" ausgehend in der Matrix endet. Diese Rißstruktur resultiert, wie oben bereits diskutiert, dadurch, daß bei einer thermischen Beanspruchung der erfindungsgemäßen CMC-Verbundwerkstoffe die durch das unterschiedliche thermische Ausdehnungsverhalten von Faserbündel und Matrix bedingten Verspannungen nicht nur in der Matrix selbst auftreten, sondern auch in den Matrixfaserbündeln. Die geringere in dem Matrixsystem gespeicherte Verspannungsenergie führt dazu, daß nur ein Teil dieser Energie in Form von Rissen abgebaut wird. Typisch hierfür ist auch die verringerte Größe der Risse und das Auslaufen von Rissen in der Matrix selbst.

### Beispiele

Im folgenden sollen exemplarisch an C/SiC-Verbundwerkstoffen die erfindungsgemäßen CMC-Verbundwerkstoffe und die mit ihnen verbundenen Verbesserungen dargestellt werden. Es handelt sich bei den C/SiC-Verbundwerkstoffen hierbei nur um ein Beispiel für die erfindungsgemäßen CMC-Verbundwerkstoffe. Gemäß den obigen Erläuterungen sind ähnliche Ergebnisse auch bei anderen CMC-Systemen zu beobachten.

Es sollen in diesen Beispielen erfindungsgemäße C/SiC-Verbundwerkstoffe, die auf der Basis von einem Verstärkungs- und einem Matrixfaserbündelanteil hergestellt wurden gemäß dem in der Offenlegungsschrift DE 197 10 105 offenbarten Verfahren, verglichen werden mit entsprechenden C/SiC-Verbundwerkstoffen, die jedoch nur einen Faserbündelanteil aufweisen.

Die Beispielproben wiesen folgende Faserbündelbestandteile auf:

**Tabelle 1: Zusammensetzung der Faserbündelanteile der Beispiele**

| | Matrixfaserbündelanteil | | Verstärkungsfaserbündelanteil | |
|---|---|---|---|---|
| Probennr. | Faserbündelmasse [%] | mittlere Faserbündellänge [mm] | Faserbündelmasse [%] | mittlere Faserbündellänge [mm] |
| 1 | 0 | - | 100 | 18 ± 2,7 |
| 2 | 0 | - | 100 | 15 ± 2,55 |
| 3 | 0 | - | 100 | 11 ± 2,5 |
| 4 | 20 | 3 ± 1,5 | 80 | 16 ± 2,6 . |
| 5 | 20 | 3 ± 1,5 | 80 | 15 ± 2,55 |
| 6 | 20 | 3 ± 1,5 | 80 | 11 ± 2,5 |
| 7 | 30 | 3 ± 1,5 | 12 | 15 ± 2,55 |
| | | | 18 | 11 ± 2,5 |
| | | | 40 | 8 ± 2,5 |

Die in die Proben eingebrachten Faserbündelanteile wiesen hierbei die folgenden Faserbündeldicken auf:

**Tabelle 2: Abmessungen der einzelnen Faserbündelfraktionen der Beispiele**

| mittlere Faserbündellänge [mm] | Mittlere Faserbündeldicke [mm] |
|---|---|
| 3 ± 1,5 | 0,5 ± 0,4 |
| 8 ± 2,5 | 1,46 ± 0,7 |
| 11 ± 2,5 | 1,46 ± 0,75 |
| 15 ± 2,55 | 1,46 ± 0,8 |
| 16 ± 2,6 | 10 ± 1,5 |
| 18 ± 2,7 | 15 ± 2,5 |

Alle 7 Beispielproben wurden wie folgt hergestellt:

Zunächst wurde ein Prepreg aus 3K-Kohlenstoffaserbündeln (3000 Einzelfilamente) hergestellt, wobei die Kohlenstoffasern auf der Basis von PAN-Fasern hergestellt worden sind. Hierzu wurden die Faserbündel zu einem Köpergewebe verflochten, anschließend das Gewebe in Phenolharz (Resol-Typ) getränkt und mit einem Trennpapier auf beiden Seiten versehen. Danach wurde das harzgetränkte Gewebe auf 130 °C erhitzt, um die Klebrigkeit des Prepegs herzustellen.

Anschließend wurden die Prepregplatten übereinandergelegt und zu einem Preßkörper verpreßt. Dieser wurde anschließend bei 900 °C gebrannt, wobei die Brennkurve im Bereich zwischen 400 °C und 600 °C eine Steigung von 5 °C pro Minute aufwies. Anschließend wurde der so erhaltene CFC-Körper dreimal hintereinander zunächst jeweils mit einem Steinkohlenteerpech mit einem Erweichungspunkt von 60 °C imprägniert und dann ebenfalls bei 900 °C gebrannt, um ihn weiter zu verdichten.

Der so erhaltene CFC-Körper wurde danach zunächst in einem Backenbrecher (Hersteller: Fa. Alpine Hosokawa) zerkleinert und anschließend in einer Schneidmühle (Hersteller: Fa. Alpine Hosokawa) in Faserbündel zerschnitten. Abschließend wurden die Faserbündel in einer Taumelsiebanlage (Hersteller Fa. Allgaier) in einzelne Faserbündelfraktionen sortiert, wobei die Siebeeinsätze (Siebfläche 1,15 m²) eine lichte Maschenweite von 0,5 mm, 1 mm, 2 mm, 3 mm, 4 mm und 6 mm aufwiesen gemäß ISO 9044. Als Ergebnis dieses Siebprozesses wurden die oben beschriebenen Faserbündelfraktionen erhalten, wobei der Wert hinter dem ±-Zeichen jeweils die halbe Halbwertsbreite der einzelnen Fraktionen angibt, die der Faserbündelverteilung der Masse der Faserbündel der einzelnen Faserbündelfraktionen bezüglich der Faserbündellänge und Faserbündelbreite zu entnehmen sind.

Danach wurden für jede Probe eine Mischung aus 70 % der Gesamtmasse Faserbündeln gemäß der oben angegebenen Zusammensetzungen und als Bindemittel 21 % der Gesamtmasse Phenolharz (Resol-Typ) und 9 % der Gesamtmasse Steinkohlenteerpech (Erweichungspunkt: 230 °C) in einem Z-Arm-Kneter (Hersteller: Fa. Werner & Pfleiderer) hergestellt. Anschließend wurden die Mischungen in einer Gesenkpresse bei einem spezifischen Druck von 12 Kp/cm² und einer Temperatur von 130 °C verpreßt. Danach erfolgte die Carbonisierung der Proben bei 900 °C unter Schutzgas und eine Graphitierung der Proben bei 2000 °C für 24 Stunden. Abschließend erfolgte die Infiltrierung der Proben bei 1700°C mit flüssigem Silicium im Vakuum unter einem Siliciumangebot des Anderthalbfachen der Probenmasse, wodurch die SiC-Struktur der Matrix der Proben erzeugt wird.

Bei der Betrachtung von Anschliffen der obigen Proben im Lichtmikroskop sind die Unterschiede in der Struktur der Matrix der Proben deutlich zu erkennen, je nachdem ob sie einen Matrixfaserbündelanteil beinhalten oder nicht. Die beobachteten Strukturen entsprechen den schematisierten Darstellungen der Figuren 5 und 6. Während die Proben, die nur einen Verstärkungsfaserbündelanteil beinhalten, in der Matrix große Risse in beträchtlicher Zahl aufweisen, die von Faserbündel zu Faserbündel verlaufen, zeigt die Struktur der erfindungsgemäßen C/SiC-Proben nur feine Risse in etwas verringerter Anzahl, wobei die Risse teilweise von einem Matrixfaserbündel ausgehend in der Matrix enden.

Die Veränderung und höhere Dichte der erfindungsgemäßen C/SiC-Proben läßt sich auch anhand ihrer Dichten ablesen, die für die Proben in Tabelle 3 angegeben sind.

Außerdem sind in der Tabelle 3 die Phasenanteile der einzelnen in den Proben enthaltenen Phasen Silicium, Kohlenstoff und SiC in Masseprozenten angegeben. Man erkennt, daß der Anteil der Phasen Silicium und Kohlenstoff in den erfindungsgemäßen C/SiC-Proben deutlich verringert ist, was die Einsatzmöglichkeiten der Werkstoffe wesentlich verbessert. Hierbei ist noch zu berücksichtigen, daß der Kohlenstoffanteil zu einem großen Teil von den Kohlenstoffaserbündeln stammt. Insbesondere eigneten sich derartige Werkstoffe sehr gut in Anwendungsfällen mit mechanischer Belastung, wie Reibbelägen. Vor allem als Bremsscheiben wurden bereits mit derartigen Werkstoffen gute Ergebnisse erzielt.

**Tabelle 3: Dichte der Proben und Zusammensetzung der Proben in Masseprozenten**

| Probennr. | Dichte | Masseanteil | Masseanteil | Masseanteil |
|---|---|---|---|---|
| | [g/cm³] | SiC [%] | Si [%] | C [%] |
| 1 | 2,10 | 31,2 | 24,8 | 44,0 |
| 2 | 2,01 | 30,0 | 25,0 | 45,0 |
| 3 | 2,08 | 30,0 | 25,2 | 44,8 |
| 4 | 2,43 | 51,8 | 16,7 | 31,5 |
| 5 | 2,41 | 51,2 | 16,5 | 32,3 |
| 6 | 2,43 | 51,6 | 16,5 | 31,9 |
| 7 | | 58,0 | 11,0 | 31,0 |

### Bezugszeichenliste

- 1: Gesamtfaserbündelverteilung
- 2: Faserbündelverteilung des Matrixfaserbündelanteils
- 3: Faserbündelverteilung des Verstärkungsfaserbündel- anteils
- 4: mittlere Faserbündellänge des Matrixfaserbündel- anteils
- 5: mittlere Faserbündellänge des Verstärkungsfaser- bündelanteils
- 6: Minimum der Gesamtfaserbündelverteilung 1
- 7: Halbwertsbreite der Faserbündelverteilung 2 des Matrixfaserbündelanteils
- 8: Halbwertsbreite der Faserbündelverteilung 3 des Verstärkungsfaserbündelanteils
- 9: Lücke der Gesamtfaserbündelverteilung 1
- 10: Gesamtfaserbündelverteilung einer Siebfraktion
- 11: beabsichtigte Faserbündelverteilung der Siebfraktion
- 12: Faserbündelverteilung des Anteils überlanger Faserbündel
- 13: Halbwertsbreite der Gesamtfaserbündelverteilung 10 einer Siebfraktion
- 14, 14': Faserbündelverteilung von Siebfraktionen, aus denen der Verstärkungsfaserbündelanteil zusammengestzt ist
- 15, 15': mittlere Faserbündellänge der Faserbündel- verteilungen 14, 14'
- 16: Faserbündelverteilung des Anteils überlanger Faserbündel der Siebfraktion des Matrixfaserbündel- anteils
- 17, 17': Faserbündelverteilung des Anteils überlanger Faserbündel der Siebfraktionen 14, 14' des Verstärkungsfaserbündelanteils
- 18: Gesamtfaserbündelverteilung überlanger Faserbündel
- 19, 19': Minimum der Gesamtfaserbündelverteilung 1 im Bereich des Verstärkungsfaserbündelanteils
- 20, 20', 20",20"': (Verstärkungs)faserbündel
- 21,21', 21",21"' 21"": Matrixfaserbündel
- 22, 22', 22", 22"" 22"": breite Risse (gemäß Stand der Technik)
- 23,23', 23",23"', 23"": kleine Risse (erfindungsgemäß)
- 24: Matrix des Verbundwerkstoffs

## Patentansprüche

1. Mit Faserbündeln (20,21) aus hochtemperaturbeständigen Fasern, die mindestens teilweise mindestens eine Schutzschicht aufweisen, verstärkter Verhundwerkstoff, mit keramischer Matrix, die Phasen von mindestens einem der Stoffe Kohlenstoff und Siliciumcarbid, sowie Kohlenstoff und/oder Silicium enthält, wobei der Verbundwerkstoff zwei verschiedene Anteile an Faserbündeln (20,21), einen Verstärkungsfaserbündelanteil (20) mit einer mittleren Faserbündellänge zwischen 4 mm und 20 mm und einen Matrixfaserbündelanteil (21) mit einer mittleren Faserbündellänge zwischen 0,2 mm und 5 mm mit unterschiedlicher mittlerer Faserbündellänge (4,5) enthält, **dadurch gekennzeichnet, daß**
- das Verhältnis der Masse des Matrixfaserbündelanteils (21) zur Masse der gesamten Faserbündel zwischen 0,1 und 0,33 liegt,
- der Verstärkungsfaserbündelanteil und der Matrixfaserbündelanteil durch ein Minimum (6) in der Gesamtfaserbündelverteilung (1) bezüglich der Faserbündellänge getrennt sind,
- wobei der Verstärkungsfaserbündelanteil (20) eine mittlere Faserbündelbreite zwischen 0,02 mm und 5 mm aufweist und der Matrixfaserbündelanteil (21) eine mittlere Faserbündelbreite zwischen 0,02 mm und 2 mm aufweiset, und
- wobei das Verhältnis der mittleren Faserbündellänge des Verstärkungsfaserbündelanteils zur mittleren Faserbündellänge des Matrixfaserbündelanteils zwischen 2,1 und 10 liegt, und
- das Verhältnis der mittleren Faserbündellänge zur mittleren Faserbündelbreite des Verstärkungsfaserbündelanteils und des Matrixfaserbündelanteils zwischen 2 und 100 beträgt.

2. Mit Faserbündeln (20,21) verstärkter Verbundwerkstoff mit keramischer Matrix (24) gemäß Patentanspruch 1, **dadurch gekennzeichnet, dass** die Faserbündel verschiedene Schutzschichten aufweisen.

3. Mit Faserbündeln (20,21) verstärkter Verbundwerkstoff mit keramischer Matrix (24) gemäß Patentanspruch 1 oder 2, **dadurch gekennzeichnet, daß** es sich bei den Fasern der Faserbündel (20,21) um Fasern aus der Gruppe der Kohlenstoffasern, Graphitfasern, SiC-Fasern, Aluminiumoxidfasern, Al₂O₃SiO₂ -Fasern, Al₂O₃SiO₂B₂O₃-Fasern, carbonisierte Formen von Cellulosefasern, Holzfasern und anderen organischen Fasern, sowie hochwarmfesten Fasern auf der Basis von Verbindungen, die Si,C,B,N,Al enthalten, handelt.

4. Mit Faserbündeln (20,21) verstärkter Verbundwerkstoff mit keramischer Matrix (24) gemäß mindestens einem der Patentansprüche 1 bis 3, **dadurch gekennzeichnet, daß** anstelle der in den Faserbündeln (20, 21) enthaltenen Fasern ganz oder teilweise Nanofasern, Whisker und/oder Nanoröhrchen in dem Verbundwerkstoff enthalten sind.

5. Mit Faserbündeln (20,21) verstärkter Verbundwerkstoff mit keramischer Matrix (24) gemäß mindestens einem der Patentansprüche 1 bis 4, **dadurch gekennzeichnet, daß** die keramische Matrix (24) Phasen von mindestens einem der Stoffe Bor, Aluminium, Zirkonium, und/oder der Legierungen aus der Gruppe Siliciumnitrid, Siliciumoxid, Bornitrid, Borcarbid, SiBCN, Al₂O₃, ZrO₂, TiC, Eisensilicide und andere Silicide sowie Glaskeramiken beinhaltet.

6. Mit Faserbündeln (20,21) verstärkter Verbundwerkstoff mit keramischer Matrix (24) gemäß Patentanspruch 5, **dadurch gekennzeichnet, daß** die keramische Matrix Zusätze von Eisen, Chrom, Titan, Molybdän, Nickel oder Aluminium beinhaltet.

7. Mit Faserbündeln (20,21) verstärkter Verbundwerkstoff mit keramischer Matrix (24) gemäß mindestens einem der Patentansprüche 3, 5 oder 6, **dadurch gekennzeichnet, daß** der Verbundwerkstoff nur Kohlenstoff- und Graphitfaserbündel beinhaltet.

8. Mit Faserbündeln (20,21) verstärkter Verbundwerkstoff mit keramischer Matrix (24) gemäß mindestens einem der Patentansprüche 5 bis 7, **dadurch gekennzeichnet, daß** die keramische Matrix (24) Phasen von Silicium, Kohlenstoff und/oder Silicumcarbid beinhaltet.

9. Mit Faserbündeln (20,21) verstärkter Verbundwerkstoff mit keramischer Matrix (24) gemäß mindestens einem der Patentansprüche 1 bis 8, **dadurch gekennzeichnet, daß** der Verbundwerkstoff zusätzlich zum Verstärkungsfaserbündelanteil (20) und Matrixfaserbündelanteil (21) noch einen Anteil überlanger Faserbündel beinhaltet.

10. Mit Faserbündeln (20,21) verstärkter Verbundwerkstoff mit keramischer Matrix (24) gemäß mindestens einem der Patentansprüche 1 bis 9, **dadurch gekennzeichnet, daß** der Verstärkungsfaserbündelanteil (20) und/oder der Matrixfaserbündelanteil (21) aus mehreren Faserbündelanteilen (14,14') mit unterschiedlicher mittlerer Faserbündellänge (15,15') zusammengesetzt sind.

11. Mit Faserbündeln (20,21) verstärkter Verbundwerkstoff mit keramischer Matrix (24) gemäß mindestens einem der Patentansprüche 1 bis 10, **dadurch gekennzeichnet, daß** die mittlere Faserbündellänge (5) des Verstärkungsfaserbündelanteils (20) zwischen 5 mm und 16 mm liegt.

12. Mit Faserbündeln (20,21) verstärkter Verbundwerkstoff mit keramischer Matrix (24) gemäß mindestens einem der Patentansprüche 1 bis 11,**dadurch gekennzeichnet, daß** die mittlere Faserbündellänge (4) des Matrixfaserbündelanteils (21) zwischen 0,5 mm und 4 mm liegt.

13. Mit Faserbündeln (20,21) verstärkter Verbundwerkstoff mit keramischer Matrix (24) gemäß mindestens einem der Patentansprüche 1 bis 12, **dadurch gekennzeichnet, daß** die mittlere Faserbündelbreite des Verstärkungsfaserbündelanteils (20) zwischen zwischen 0,1 mm und 3 mm liegt.

14. Mit Faserbündeln (20,21) verstärkter Verbundwerkstoff mit keramischer Matrix (24) gemäß mindestens einem der Patentansprüche 1 bis 13, **dadurch gekennzeichnet, daß** die mittlere Faserbündelbreite des Matrixfaser-bündelanteils (21) 0,1 mm und 1 mm liegt.

15. Mit Faserbündeln (20,21) verstärkter Verbundwerkstoff mit keramischer Matrix (24) gemäß mindestens einem der Patentansprüche 1 bis 14, **dadurch gekennzeichnet, daß** das Verhältnis der mittleren Faserbündellänge (5) des Verstärkungsfaserbündelanteils (20) zur mittleren Faserbündellänge (4) des Matrixfaserbündelanteils (21) zwischen 2,1 und 5 liegt.

16. Mit Faserbündeln (20,21) verstärkter Verbundwerkstoff mit keramischer Matrix (24) gemäß mindestens einem der Patentansprüche 1 bis 15,**dadurch gekennzeichnet, daß** das Verhältnis der mittleren Faserbündellänge (5) des Verstärkungsfaserbündeianteils (20) zur mittleren Faserbündelbreite des Verstärkungsfaserbündelanteils (20) zwischen 2 und 500 beträgt, bevorzugt zwischen 3 und 100 und besonders bevorzugt zwischen 4 und 20.

17. Mit Faserbündeln (20,21) verstärkter Verbundwerkstoff mit keramischer Matrix (24) gemäß mindestens einem der Patentansprüche 1 bis 16, **dadurch gekennzeichnet, daß** das Verhältnis der mittleren Faserbündellänge (4) des Matrixfaserbündelanteils (21) zur mittleren Faserbündelbreite des Matrixfaserbündelanteils (21) zwischen 2 und 500 beträgt, bevorzugt zwischen 3 und 100 und besonders bevorzugt zwischen 4 und 20.

18. Mit Faserbündeln (20,21) verstärkter Verbundwerkstoff mit keramischer Matrix (24) gemäß mindestens einem der Patentansprüche 1 bis 17, **dadurch gekennzeichnet, daß** das mittlere Länge/Breite/Höhe-Verhältnis des Verstärkungsfaserbündelanteils (20) zwischen 2 und 50.000 beträgt, bevorzugt zwischen 5 und 2.000 und besonders bevorzugt zwischen 10 und 100.

19. Mit Faserbündeln (20,21) verstärkter Verbundwerkstoff mit keramischer Matrix (24) gemäß mindestens einem der Patentansprüche 1 bis 18, **dadurch gekennzeichnet, daß** das mittlere Länge/Breite/Höhe-Verhältnis des Matrixfaserbündelanteils (21) zwischen 2 und 50.000 beträgt, bevorzugt zwischen 10 und 5.000 und besonders bevorzugt zwischen 30 und 500.

20. Mit Faserbündeln (20,21) verstärkter Verbundwerkstoff mit keramischer Matrix (24) gemäß mindestens einem der Patentansprüche 1 bis 19,
**dadurch gekennzeichnet, daß**
das Verhältnis der Masse des Matrixfaserbündelanteils (21) zur Masse der gesamten Faserbündel zwischen 0,2 und 0,33 liegt.

21. Mit Faserbündeln (20,21) verstärkter Verbundwerkstoff mit keramischer Matrix (24) gemäß mindestens einem der Patentansprüche 1 bis 20, **dadurch gekennzeichnet, daß** die Halbwertsbreite (8) der Faserbündellängenverteilung (3) des Verstärkungsfaserbündelanteils (20) zwischen 0,01 mm und 15 mm beträgt, bevorzugt zwischen 0,1 mm und 12 mm und besonders bevorzugt zwischen 1 mm und 8 mm.

22. Mit Faserbündeln (20,21) verstärkter Verbundwerkstoff mit keramischer Matrix (24) gemäß mindestens einem der Patentansprüche 1 bis 21, **dadurch gekennzeichnet, daß** die Halbwertsbreite (7) der Faserbündellängenverteilung (2) des Matrixfaserbündelanteils (21) zwischen 0,01 mm und 5 mm beträgt, bevorzugt zwischen 0,1 mm und 4 mm und besonders bevorzugt zwischen 1 mm und 3,5 mm.

23. Verfahren zur Herstellung von mit Faserbündeln (20,21) verstärkten Verbundwerkstoffen mit keramischer Matrix (24),
**dadurch gekennzeichnet, daß**
zwei verschiedene Anteile an Faserbündeln (20,21), ein Verstärkungsfaserbündelanteil (20) und ein Matrixfaserbündelanteil (21) mit unterschiedlicher mittlerer Faserbündellänge (4,5) im Herstellungsprozeß als Ausgangsstoffe angewendet werden, wobei
- der Verstärkungsfaserbündelanteil (20) eine mittlere Faserbündellänge zwischen 4 mm und 20 mm und der Matrixfaserbündelanteil (21) eine mittlere Faserbündellänge zwischen 0,2 mm und 5 mm aufweist,
- das Verhältnis der Masse des Matrixfaserbündelanteils (21) zur Masse der gesamten Faserbündel zwischen 0,1 und 0,33 liegt,
- der Verstärkungsfasserbündelanteil und der Matrixiaserbündelanteil durch ein Minimum (6) in der Gesamtfaserbündelverteilung (1) bezüglich der Faserbündellänge getrennt sind,
- der Verstärkungsfaserbündelanteil (20) eine mittlere Faserbündelbreite zwischen 0,02 mm und 5 mm aufweist und der Matrixfaserbündelanteil (21) eine mittlere Faserbündelbreite zwischen 0,02 mm und 2 mm aufweist, und
- das Verhältnis der mittleren Faserbündellänge des Verstärkungsfaserbündelanteils zur mittleren Faserbündellänge des Matrixfaserbündelanteils zwischen 2,1 und 10 liegt, und
- das Verhältnis der mittleren Faserbündellänge zur mittleren Faserbündelbreite des Verstärkungsfaserbündelanteils und des Matrixfaserbündelanteils zwischen 2 und 100 beträgt,
und diese Faserbündel in einem weiteren Schritt mit mindestens einem carbonisierbaren Bindemittel aus der Gruppe der Harze und Peche vermischt und anschließend verpreßt werden, und in einem weiteren Schritt der so hergestellte Formling mit pyrolysierbaren Polymeren infiltriert wird.

24. Verfahren zur Herstellung von mit Faserbündeln (20,21) verstärkten Verbundwerkstoffen mit keramischer Matrix (24) nach Patentanspruch 23, **dadurch gekennzeichnet, daß** zusätzlich zu den Polymeren weitere Füllstoffe infiltriert werden.

25. Verfahren zur Herstellung von mit Faserbündeln (20,21) verstärkten Verbundwerkstoffen mit keramischer Matrix (24) nach Patentanspruch 23, **dadurch gekennzeichnet, daß** die beiden verschiedenen Anteile an Faserbündeln (20,21) während eines Mischungsprozesses anderen Komponenten zur Herstellung des Verbundwerkstoffs zugesetzt werden.

26. Verfahren zur Herstellung von mit Faserbündeln (20,21) verstärkten Verbundwerkstoffen mit keramischer Matrix (24) nach mindestens einem der Patentansprüche 23 bis 25, **dadurch gekennzeichnet, daß** mindestens ein Teil der Faserbündel (20,21) zumindestens teilweise mindestens eine Schutzschicht aufweist.

27. Verfahren zur Herstellung von mit Faserbündeln (20,21) verstärkten Verbundwerkstoffen mit keramischer Matrix (24) nach mindestens einem der Patentansprüche 23 bis 26, **dadurch gekennzeichnet, daß** nur Kohlenstoff- und Graphitfaserbündel bei der Herstellung verwendet werden.

28. Verfahren zur Herstellung von mit Faserbündeln (20,21) verstärkten Verbundwerkstoffen mit keramischer Matrix (24) nach mindestens einem der Patentansprüche 23 bis 27,**dadurch gekennzeichnet, daß** nach dem Mischen die Mischung verdichtet wird.

29. Verfahren zur Herstellung von mit Faserbündeln (20,21) verstärkten Verbundwerkstoffen mit keramischer Matrix (24) nach Patentanspruch 28, **dadurch gekennzeichnet, daß** das Verdichten bei erhöhter Temperatur erfolgt.

30. Verfahren zur Herstellung von mit Faserbündeln (20,21) verstärkten Verbundwerkstoffen mit keramischer Matrix (24) nach Patentanspruch 2 8 oder 29, **dadurch gekennzeichnet, daß** nach dem Verdichten der Formkörper einer Temperatur-behandlung oberhalb der Aushärtungstemperatur der Harzbinder in der Mischung unterzogen wird.

31. Verfahren zur Herstellung von mit Faserbündeln (20,21) verstärkten Verbundwerkstoffen mit keramischer Matrix (24) nach mindestens einem der Patentansprüche 23 bis 30, **dadurch gekennzeichnet, daß** in einem weiteren Verfahrensschritt die Bindemittel carbonisiert werden.

32. Verfahren zur Herstellung von mit Faserbündeln (20,21) verstärkten Verbundwerkstoffen mit keramischer Matrix (24) nach mindestens einem der Patentansprüche 23 bis 31, **dadurch gekennzeichnet, daß** das Verfahren als weiteren Verfahrenschritt die Graphitierung bei Temperaturen über 2000 °C beinhaltet.

33. Verfahren zur Herstellung von mit Faserbündeln (20,21) verstärkten Verbundwerkstoffen mit keramischer Matrix (24) nach mindestens einem der Patentansprüche 23 bis 32, **dadurch gekennzeichnet, daß** in einem abschließenden Verfahrensschritt eine Silicierung vorgenommen wird.

34. Verfahren zur Herstellung von mit Faserbündeln (20,21) verstärkten Verbundwerkstoffen mit keramischer Matrix (24) nach mindestens einem der Patentansprüche 23 bis 33, **dadurch gekennzeichnet, daß** die mittlere Faserbündellänge (5) des verwendeten Verstärkungsfaserbündelanteils (20) zwischen 4 mm und 20 mm liegt, bevorzugt zwischen 5 mm und 16 mm und besonders bevorzugt zwischen 6 mm und 12 mm.

35. Verfahren zur Herstellung von mit Faserbündeln (20,21) verstärkten Verbundwerkstoffen mit keramischer Matrix (24) nach mindestens einem der Patentansprüche 23 bis 34, **dadurch gekennzeichnet, daß** die mittlere Faserbündellänge (4) des verwendeten Matrixfaserbündelanteils (21) zwischen 0,2 mm und 5 mm liegt, bevorzugt zwischen 0,5 mm und 4 mm und besonders bevorzugt zwischen 1 mm und 3,5 mm.

36. Verfahren zur Herstellung von mit Faserbündeln (20,21) verstärkten Verbundwerkstoffen mit keramischer Matrix (24) nach mindestens einem der Patentansprüche 23 bis 35, **dadurch gekennzeichnet, daß** das Verhältnis der mittleren Faserbündellänge (5) des verwendeten Verstärkungsfaserbündelanteiis (20) zur mittleren Faserbündellänge (4) des verwendeten Matrixfaserbündelanteils (21) zwischen 1,5 und 10 beträgt, bevorzugt zwischen 1,8 und 7 und besonders bevorzugt zwischen 2,1 und 5.

37. Verfahren zur Herstellung von mit Faserbündeln (20,21) verstärkten Verbundwerkstoffen mit keramischer Matrix (24) nach mindestens einem der Patentansprüche 23 bis 36, **dadurch gekennzeichnet, daß** das mittlere Länge/Breite/Höhe-Verhältnis des verwendeten Verstärkungsfaserbündelanteils (20) zwischen 2 und 50.000 beträgt, bevorzugt zwischen 5 und 2.000 und besonders bevorzugt zwischen 10 und 100.

38. Verfahren zur Herstellung von mit Faserbündeln (20,21) verstärkten Verbundwerkstoffen mit keramischer Matrix (24) nach mindestens einem der Patentansprüche 23 bis 37, **dadurch gekennzeichnet, daß** das mittlere Länge/Breite/Höhe-Verhältnis des verwendeten Matrixfaserbündelanteils (21) zwischen 2 und 50.000 beträgt, bevorzugt zwischen 10 und 5.000 und besonders bevorzugt zwischen 30 und 500.

39. Verfahren zur Herstellung von mit Faserbündeln (20,21) verstärkten Verbundwerkstoffen mit keramischer Matrix (24) nach mindestens einem der Patentansprüche 23 bis 38, **dadurch gekennzeichnet, daß** der Masseanteil der beim Mischprozeß eingebrachten Faserbündel (20,21) beider Faserbündelanteile ingesamt 50 bis 99 % der Gesamtmasse der Mischung beträgt, bevorzugt 60 bis 90 % und besonders bevorzugt 65 bis 80 % der Gesamtmasse der Mischung.

40. Verfahren zur Herstellung von mit Faserbündeln (20,21) verstärkten Verbundwerkstoffen mit keramischer Matrix (24) nach mindestens einem der Patentansprüche 23 bis 39,**dadurch gekennzeichnet, daß** der Masseanteil der beim Mischprozeß eingebrachten Faserbündel des Verstärkungsfaserbündelanteils (20) 20 bis 80 % der Gesamtmasse der Mischung beträgt, bevorzugt 35 bis 65 % und besonders bevorzugt 42 bis 55 % der Gesamtmasse der Mischung.

41. Verfahren zur Herstellung von mit Faserbündeln (20,21) verstärkten Verbundwerkstoffen mit keramischer Matrix (24) nach mindestens einem der Patentansprüche 23 bis 40,
**dadurch gekennzeichnet, daß**
der Masseanteil der beim Mischprozeß eingebrachten Faserbündel des Matrixfaserbündelanteils (21) 10 bis 40 % der Gesamtmasse der Mischung beträgt, bevorzugt 15 bis 35 % und besonders bevorzugt 20 bis 30 % der Gesamtmasse der Mischung.

42. Verfahren zur Herstellung von mit Faserbündeln (20,21) verstärkten Verbundwerkstoffen mit keramischer Matrix (24) nach mindestens einem der Patentansprüche 23 bis 41, **dadurch gekennzeichnet, daß** das Verhältnis der Masse des verwendeten Matrixfaserbündelanteils (21) zur Masse der verwendeten gesamten Faserbündel zwischen 0,1 und 0,8 liegt, bevorzugt zwischen 0,2 und 0,5 und besonders bevorzugt zwischen 0,27 und 0,33.

43. Verwendung eines mit Faserbündeln (20,21) verstärkten Verbundwerkstoffs mit keramischer Matrix (24) gemäß mindestens einem der Patentansprüche 1 bis 22 als Teile von Gasturbinen wie Turbinenrädern, Teile von Brennern, Düsen und Teile davon, Heißgasrohre, Meßsonden, Hüllrohre für Sonden, Reibstoffe wie Bremsscheiben und Bremsbeläge für Luftfahrzeuge, Schienenfahrzeuge und Kraftfahrzeuge, Hitzeschilde, Thermalschutzkomponenten von Raumtransportern und Flugtriebwerken, Komponenten von Gleitlagern und Gleitelementen, Trägerkomponenten für Spiegel, Antennen und Reflektoren, Flugkörperkomponenten, Feuerroste und Komponenten von Wärmetauscher.

## Claims

1. A composite reinforced with bundles (20,21) of high-temperature-resistant fibres which at least partly have at least one protective layer and having a ceramic matrix containing phases of at least one of the materials carbon and silicon carbide and also carbon and/or silicon, where the composite contains two different fractions of fibre bundles (20, 21), a reinforcing fibre bundle fraction (20) having an average fibre bundle length in the range from 4 mm to 20 mm and a matrix fibre bundle fraction (21) having an average fibre bundle length in the range from 0.2 mm to 5 mm, having different average fibre bundle lengths (4,5), wherein
- the ratio of the mass of the matrix fibre bundle fraction (21) to the mass of the total fibre bundles is in the range from 0.1 to 0.33,
- the reinforcing fibre bundle fraction and the matrix fibre bundle fraction are separated in respect of the fibre bundle length by a minimum (6) in the total fibre bundle distribution (1),
- where the reinforcing fibre bundle fraction (20) has an average fibre bundle width of from 0.02 mm to 5 mm and the matrix fibre bundle fraction (21) has an average fibre bundle width in the range from 0.02 mm to 2 mm and
- the ratio of the average fibre bundle length of the reinforcing fibre bundle fraction to the average fibre bundle length of the matrix fibre bundle fraction is in the range from 2.1 to 10 and
- the ratio of the average fibre bundle length to the average fibre bundle width of the reinforcing fibre bundle fraction and of the matrix fibre bundle fraction is in the range from 2 to 100.

2. The composite reinforced with fibre bundles (20,21) and having a ceramic matrix (24) as claimed in claim 1, wherein the fibre bundles have different protective layers.

3. The composite reinforced with fibre bundles (20,21) and having a ceramic matrix (24) as claimed in claim 1 or 2, wherein the fibres of the fibre bundles (20,21) are fibres selected from the group consisting of carbon fibres, graphite fibres, SiC fibres, aluminium oxide fibres, Al₂O₃SiO₂ fibres, Al₂O₃SiO₂B₂O₃ fibres, carbonised forms of cellulose fibres, wood fibres and other organic fibres and also highly heat-resistant fibres based on compounds containing Si, C, B, N, Al.

4. The composite reinforced with fibre bundles (20,21) and having a ceramic matrix (24) as claimed in at least one of the claims 1 to 3, wherein the fibres present in the fibre bundles (20,21) are replaced completely or partly by nanofibres, whiskers and/or nanotubes in the composite.

5. The composite reinforced with fibre bundles (20,21) and having a ceramic matrix (24) as claimed in at least one of claims 1 to 4, wherein the ceramic matrix (24) comprises phases of at least one of the materials boron, aluminium, zirconium and/or alloys selected from the group consisting of silicon nitride, silicon oxide, boron nitride, boron carbide, SiBCN, Al₂O₃, ZrO₂, TiC, iron silicides and other silicides and glass ceramics.

6. The composite reinforced with fibre bundles (20,21) and having a ceramic matrix (24) as claimed in claim 5, wherein the ceramic matrix comprises additions of iron, chromium, titanium, molybdenum, nickel or aluminium.

7. The composite reinforced with fibre bundles (20,21) and having a ceramic matrix (24) as claimed in at least one of claims 3, 5 and 6, wherein the composite comprises only carbon fibre bundles and graphite fibre bundles.

8. The composite reinforced with fibre bundles (20,21) and having a ceramic matrix (24) as claimed in at least one of claims 5 to 7, wherein the ceramic matrix (24) comprises phases of silicon, carbon and/or silicon carbide.

9. The composite reinforced with fibre bundles (20,21) and having a ceramic matrix (24) as claimed in at least one of claims 1 to 8, wherein the composite comprises a proportion of overlength fibre bundles in addition to the reinforcing fibre bundle fraction (20) and matrix fibre bundle fraction (21).

10. The composite reinforced with fibre bundles (20,21) and having a ceramic matrix (24) as claimed in at least one of claims 1 to 9, wherein the reinforcing fibre bundle fraction (20) and/or the matrix fibre bundle fraction (21) are composed of a plurality of fibre bundle fractions (14,14') having different average fibre bundle lengths (15,15').

11. The composite reinforced with fibre bundles (20,21) and having a ceramic matrix (24) as claimed in at least one of claims 1 to 10, wherein the average fibre bundle length (5) of the reinforcing fibre bundle fraction (20) is in the range from 5 mm to 16 mm.

12. The composite reinforced with fibre bundles (20,21) and having a ceramic matrix (24) as claimed in at least one of claims 1 to 11, wherein the average fibre bundle length (4) of the matrix fibre bundle fraction (21) is in the range from 0.5 mm to 4 mm.

13. The composite reinforced with fibre bundles (20,21) and having a ceramic matrix (24) as claimed in at least one of claims 1 to 12, wherein the average fibre bundle width of the reinforcing fibre bundle fraction (20) is in the range from 0.1 mm to 3 mm.

14. The composite reinforced with fibre bundles (20,21) and having a ceramic matrix (24) as claimed in at least one of claims 1 to 13, wherein the average fibre bundle width of the matrix fibre bundle fraction (21) is from 0.1 mm to 1 mm.

15. The composite reinforced with fibre bundles (20,21) and having a ceramic matrix (24) as claimed in at least one of claims 1 to 14, wherein the ratio of the average fibre bundle length (5) of the reinforcing fibre bundle fraction (20) to the average fibre bundle length (4) of the matrix fibre bundle fraction (21) is in the range from 2.1 to 5.

16. The composite reinforced with fibre bundles (20,21) and having a ceramic matrix (24) as claimed in at least one of claims 1 to 15, wherein the ratio of the average fibre bundle length (5) of the reinforcing fibre bundle fraction (20) to the average fibre bundle width of the reinforcing fibre bundle fraction (20) is in the range from 2 to 500, preferably from 3 to 100 and particularly preferably from 4 to 20.

17. The composite reinforced with fibre bundles (20,21) and having a ceramic matrix (24) as claimed in at least one of claims 1 to 16, wherein the ratio of the average fibre bundle length (4) of the matrix fibre bundle fraction (21) to the average fibre bundle width of the matrix fibre bundle fraction (21) is in the range from 2 to 500, preferably from 3 to 100 and particularly preferably from 4 to 20.

18. The composite reinforced with fibre bundles (20,21) and having a ceramic matrix (24) as claimed in at least one of claims 1 to 17, wherein the average length/width/height ratio of the reinforcing fibre bundle fraction (20) is in the range from 2 to 50 000, preferably from 5 to 2000 and particularly preferably from 10 to 100.

19. The composite reinforced with fibre bundles (20,21) and having a ceramic matrix (24) as claimed in at least one of claims 1 to 18, wherein the average length/width/height ratio of the matrix fibre bundle fraction (21) is in the range from 2 to 50 000, preferably from 10 to 5000 and particularly preferably from 30 to 500.

20. The composite reinforced with fibre bundles (20,21) and having a ceramic matrix (24) as claimed in at least one of claims 1 to 19, wherein the ratio of the mass of the matrix fibre bundle fraction (21) to the mass of the total fibre bundles is in the range from 0.2 to 0.33.

21. The composite reinforced with fibre bundles (20,21) and having a ceramic matrix (24) as claimed in at least one of claims 1 to 20, wherein the width at half height (8) of the fibre bundle length distribution (3) of the reinforcing fibre bundle fraction (20) is in the range from 0.01 mm to 15 mm, preferably from 0.1 mm to 12 mm and particularly preferably from 1 mm to 8 mm.

22. The composite reinforced with fibre bundles (20,21) and having a ceramic matrix (24) as claimed in at least one of claims 1 to 21, wherein the width at half height (7) of the fibre bundle length distribution (2) of the matrix fibre bundle fraction (21) is in the range from 0.01 mm to 5 mm, preferably from 0.1 mm to 4 mm and particularly preferably from 1 mm to 3.5 mm.

23. A process for producing composites reinforced with fibre bundles (20,21) and having a ceramic matrix (24), wherein two different fractions of fibre bundles (20,21), a reinforcing fibre bundle fraction (20) and a matrix fibre bundle fraction (21) having different average fibre bundle lengths (4,5) are employed as starting materials in the production process, where
- the reinforcing fibre bundle fraction (20) has an average fibre bundle length in the range from 4 mm to 20 mm, and the matrix fibre bundle fraction (21) has an average fibre bundle length in the range from 0.2 mm to 5 mm,
- the ratio of the mass of the matrix fibre bundle fraction (21) to the mass of the total fibre bundles is in the range from 0.1 to 0.33,
- the reinforcing fibre bundle fraction and the matrix fibre bundle fraction are separated in respect of the fibre bundle length by a minimum (6) in the total fibre bundle distribution (1),
- the reinforcing fibre bundle fraction (20) has an average fibre bundle width in the range from 0.02 mm to 5 mm and the matrix fibre bundle fraction (21) has an average fibre bundle width in the range from 0.02 mm to 2 mm and
- the ratio of the average fibre bundle length of the reinforcing fibre bundle fraction to the average fibre bundle length of the matrix fibre bundle fraction is in the range from 2.1 to 10 and
- the ratio of the average fibre bundle length to the average fibre bundle width of the reinforcing fibre bundle fraction and of the matrix fibre bundle fraction is in the range from 2 to 100,
and these fibre bundles are, in a further step, mixed with at least one carbonizable binder selected from the group consisting of resins and pitches and are subsequently pressed and the shaped body produced in this way is infiltrated with pyrolyzable polymers in a further step.

24. The process for producing composites reinforced with fibre bundles (20,21) and having a ceramic matrix (24) as claimed in claim 23, wherein further fillers in addition to the polymers are introduced by infiltration.

25. The process for producing composites reinforced with fibre bundles (20,21) and having a ceramic matrix (24) as claimed in claim 23, wherein the two different fractions of fibre bundles (20,21) are added during a mixing process for other components to produce the composite.

26. The process for producing composites reinforced with fibre bundles (20,21) and having a ceramic matrix (24) as claimed in at least one of claims 23 to 25, wherein at least one part of the fibre bundles (20,21) at least partly has at least one protective layer.

27. The process for producing composites reinforced with fibre bundles (20,21) and having a ceramic matrix (24) as claimed in at least one of claims 23 to 26, wherein only carbon fibre bundles and graphite fibre bundles are used in the process.

28. The process for producing composites reinforced with fibre bundles (20,21) and having a ceramic matrix (24) as claimed in at least one of claims 23 to 27, wherein the mixture is compacted after mixing.

29. The process for producing composites reinforced with fibre bundles (20,21) and having a ceramic matrix (24) as claimed in claim 28, wherein compacting is carried out at elevated temperature.

30. The process for producing composites reinforced with fibre bundles (20,21) and having a ceramic matrix (24) as claimed in claim 28 or 29, wherein the shaped body is subjected to a heat treatment above the curing temperature of the resin binder in the mixture after compacting.

31. The process for producing composites reinforced with fibre bundles (20,21) and having a ceramic matrix (24) as claimed in at least one of claims 23 to 30, wherein the binders are carbonised in a further process step.

32. The process for producing composites reinforced with fibre bundles (20,21) and having a ceramic matrix (24) as claimed in at least one of claims 23 to 31, wherein the process comprises graphitisation at temperatures above 2000 °C as a further process step.

33. The process for producing composites reinforced with fibre bundles (20,21) and having a ceramic matrix (24) as claimed in at least one of claims 23 to 32, wherein a silicisation is carried out in a final process step.

34. The process for producing composites reinforced with fibre bundles (20,21) and having a ceramic matrix (24) as claimed in at least one of claims 23 to 33, wherein the average fibre bundle length (5) of the reinforcing fibre bundle fraction (20) used is in the range from 4 mm to 20 mm, preferably from 5 mm to 16 mm and particularly preferably from 6 mm to 12 mm.

35. The process for producing composites reinforced with fibre bundles (20,21) and having a ceramic matrix (24) as claimed in at least one of claims 23 to 34, wherein the average fibre bundle length (4) of the matrix fibre bundle fraction (21) used is in the range from 0.2 mm to 5 mm, preferably from 0.5 mm to 4 mm and particularly preferably from 1 mm to 3.5 mm.

36. The process for producing composites reinforced with fibre bundles (20,21) and having a ceramic matrix (24) as claimed in at least one of claims 23 to 35, wherein the ratio of the average fibre bundle length (5) of the reinforcing fibre bundle fraction (20) used to the average fibre bundle length (4) of the matrix fibre bundle fraction (21) used is in the range from 1.5 to 10, preferably from 1.8 to 7 and particularly preferably from 2.1 to 5.

37. The process for producing composites reinforced with fibre bundles (20,21) and having a ceramic matrix (24) as claimed in at least one of claims 23 to 36, wherein the average length/width/height ratio of the reinforcing fibre bundle fraction (20) used is in the range from 2 to 50 000, preferably from 5 to 2000 and particularly preferably from 10 to 100.

38. The process for producing composites reinforced with fibre bundles (20,21) and having a ceramic matrix (24) as claimed in at least one of claims 23 to 37, wherein the average length/width/height ratio of the matrix fibre bundle fraction (21) used is in the range from 2 to 50 000, preferably from 10 to 5000 and particularly preferably from 30 to 500.

39. The process for producing composites reinforced with fibre bundles (20,21) and having a ceramic matrix (24) as claimed in at least one of claims 23 to 38, wherein the mass fraction of the fibre bundles (20,21) of both fibre bundle fractions introduced in the mixing process is altogether from 50 to 99 % of the total mass of the mixture, preferably from 60 to 90 % and particularly preferably from 65 to 80 % of the total mass of the mixture.

40. The process for producing composites reinforced with fibre bundles (20,21) and having a ceramic matrix (24) as claimed in at least one of claims 23 to 39, wherein the mass fraction of the fibre bundles of the reinforcing fibre bundle fraction (20) introduced in the mixing process is from 20 to 80 % of the total mass of the mixture, preferably from 35 to 65 % and particularly preferably from 42 to 55 % of the total mass of the mixture.

41. The process for producing composites reinforced with fibre bundles (20,21) and having a ceramic matrix (24) as claimed in at least one of claims 23 to 40, wherein the mass fraction of the fibre bundles of the matrix fibre bundle fraction (21) introduced in the mixing process is from 10 to 40 % of the total mass of the mixture, preferably from 15 to 35 % and particularly preferably from 20 to 30 % of the total mass of the mixture.

42. The process for producing composites reinforced with fibre bundles (20, 21) and having a ceramic matrix (24) as claimed in at least one of claims 23 to 41, wherein the ratio of the mass of the matrix fibre bundle fraction (21) used to the mass of the total fibre bundles used is in the range from 0.1 to 0.8, preferably from 0.2 to 0.5 and particularly preferably from 0.27 to 0.33.

43. The use of a composite reinforced with fibre bundles (20,21) and having a ceramic matrix (24) as claimed in at least one of claims 1 to 22 as part of gas turbines, for example turbine wheels, parts of burners, nozzles and parts thereof, hot gas tubes, measurement sensors, sheathing tubes for sensors, friction materials such as brake disks and brake linings for aircraft, rail vehicles and motor vehicles, heat shields, thermal protection components of space transporters and aircraft engines, components of sliding bearings and sliding elements, support components for mirrors, antennae and reflectors, missile components, firing gratings and components of heat exchangers.

## Revendications

1. Matériau composite à matrice céramique, renforcé par des faisceaux de fibres (20, 21) faits de fibres résistant aux températures élevées, qui présentent au moins en partie au moins une couche protectrice, qui comprend des phases d'au moins une des substances carbone et carbure de silicium ainsi du carbone et/ou du silicium, dans lequel le matériau composite comprend deux différentes portions de faisceaux de fibres (20,21), une portion de faisceaux de fibres de renforcement (20), ayant une longueur moyenne de faisceaux de fibres comprise entre 4 mm et 20 mm et une portion de faisceaux de fibres de matrice (21), ayant une longueur moyenne de faisceaux de fibres comprise entre 0,2 mm et 5 mm, avec une longueur moyenne de faisceaux de fibres différente (4, 5), **caractérisé en ce que**,
- le rapport de la masse de la portion de faisceaux de fibres de matrice (21) à la masse du faisceau de fibres total se situe entre 0,1 et 0,33,
- la portion de faisceaux de fibres de renforcement et la portion de faisceaux de fibres de matrice sont séparées par un minimum (6) dans la distribution de faisceaux de fibres totaux (1) pour ce qui est de la longueur des faisceaux de fibres,
- dans lequel la portion de faisceaux de fibres de renforcement (20) présente une largeur moyenne de faisceaux de fibres comprise entre 0,02 mm et 5 mm et la portion de faisceau de fibres de matrice (21) présente une largeur moyenne de faisceaux de fibres comprise entre 0,02 mm et 2 mm, et
- dans lequel le rapport de la longueur moyenne de faisceaux de fibres de la portion de faisceaux de fibres de renforcement à la longueur moyenne de faisceaux de fibres de la portion de faisceaux de fibres de matrice se situe entre 2,1 et 10, et
- dans lequel le rapport de la longueur moyenne de faisceaux de fibres à la largeur moyenne de faisceaux de fibres de la portion de faisceaux de fibres de renforcement et de la portion de faisceaux de fibres de matrice est comprise entre 2 et 100.

2. Matériau composite à matrice céramique (24), renforcé par des faisceaux de fibres (20,21) selon la revendication 1, **caractérisé en ce que** les faisceaux de fibres présentent des couches protectrices différentes.

3. Matériau composite à matrice céramique (24), renforcé par des faisceaux de fibres (20, 21) selon la revendication 1 ou 2, **caractérisé en ce qu'**il s'agit, pour les fibres des faisceaux de fibres (20, 21), de fibres du groupe des fibres de carbone, des fibres de graphite, des fibres de SiC, des fibres d'oxyde d'aluminium, des fibres de Al₂O₃SiO₂ des fibres de Al₂O₃SiO₂B₂O₃, des formes carbonisées de fibres de cellulose, des fibres de bois et d'autres fibres organiques, ainsi que des fibres résistantes à l'échauffement à base de composés qui comprennent Si, C, B, N, Al.

4. Matériau composite à matrice céramique (24), renforcé par des faisceaux de fibres (20, 21) selon au moins une des revendications 1 à 3, **caractérisé en ce qu'**à la place des fibres comprises dans les faisceaux de fibres (20, 21), le matériau composite comprend, entièrement ou partiellement, des nanofibres, des whiskers et/ou des nanotubes.

5. Matériau composite à matrice céramique (24), renforcé par des faisceaux de fibres (20, 21) selon au moins une des revendications 1 à 4, **caractérisé en ce que** la matrice céramique (24) comprend des phases d'au moins une des substances bore, aluminium, zirconium, et/ou des alliages du groupe nitrure de silicium, oxyde de silicium, nitrure de bore, carbure de bore, SiBCN, Al₂O₃, ZrO₂, TiC, des siliciures de fer et d'autres siliciures ainsi que des vitrocéramiques.

6. Matériau composite à matrice céramique (24), renforcé par des faisceaux de fibres (20, 21) selon la revendication 5, **caractérisé en ce que** la matrice céramique comprend des additifs de fer, de chrome, de titane, de molybdène, de nickel ou d'aluminium.

7. Matériau composite à matrice céramique (24), renforcé par des faisceaux de fibres (20, 21) selon au moins une des revendications 3, 5, ou 6, **caractérisé en ce que** le matériau composite ne comprend que des faisceaux de fibres de carbone ou de graphite.

8. Matériau composite à matrice céramique (24), renforcé par des faisceaux de fibres (20, 21) selon au moins une quelconque des revendications 5 à 7, **caractérisé en ce que** la matrice céramique (24) comprend des phases de silicium, de carbone et/ou de carbure de silicium.

9. Matériau composite à matrice céramique (24), renforcé par des faisceaux de fibres (20, 21) selon au moins une des revendications 1 à 8, **caractérisé en ce que** le matériau composite comprend, en plus de la portion de faisceaux de fibres de renforcement (20) et de la portion de faisceaux de fibres de matrice (21), une autre portion de faisceaux de fibres ultra-longs.

10. Matériau composite à matrice céramique (24), renforcé par des faisceaux de fibres (20, 21) selon au moins une des revendications 1 à 9, **caractérisé en ce que** la portion de faisceaux de fibres de renforcement (20) et/ou la portion de faisceaux de fibres de matrice (21) sont composées de plusieurs portions de faisceaux de fibres (14, 14') supplémentaires ayant des longueurs moyennes de faisceaux de fibres différentes (15, 15').

11. Matériau composite à matrice céramique (24), renforcé par des faisceaux de fibres (20, 21) selon au moins une des revendications 1 à 10, **caractérisé en ce que** la longueur moyenne de faisceaux de fibres (5) de la portion de faisceaux de fibres de renforcement (20) se situe entre 5 mm et 16 mm.

12. Matériau composite à matrice céramique (24), renforcé par des faisceaux de fibres (20, 21) selon au moins une des revendications 1 à 11, **caractérisé en ce que** la longueur moyenne de faisceaux de fibres (4) de la portion de faisceaux de fibres de matrice (21) se situe entre 0,5 mm et 4 mm.

13. Matériau composite à matrice céramique (24), renforcé par des faisceaux de fibres (20, 21) selon au moins une des revendications 1 à 12, **caractérisé en ce que** la largeur moyenne de faisceaux de fibres de la portion de faisceaux de fibres de renforcement (20) se situe entre 0,1 mm et 3 mm.

14. Matériau composite à matrice céramique (24), renforcé par des faisceaux de fibres (20, 21) selon au moins une des revendications 1 à 13, **caractérisé en ce que** la largeur moyenne de faisceaux de fibres de la portion de faisceaux de fibres de matrice (21) se situe entre 0,1 mm et 1 mm.

15. Matériau composite à matrice céramique (24), renforcé par des faisceaux de fibres (20, 21) selon au moins une des revendications 1 à 14, **caractérisé en ce que** le rapport de la longueur moyenne (5) de faisceaux de fibres de la portion de faisceaux de fibres de renforcement (20) à la longueur moyenne (4) de faisceaux de fibres de la portion de faisceaux de fibres de matrice (21) se situe entre 2,1 et 5.

16. Matériau composite à matrice céramique (24), renforcé par des faisceaux de fibres (20, 21) selon au moins une des revendications 1 à 15, **caractérisé en ce que** le rapport de la longueur moyenne (5) de faisceaux de fibres de la portion de faisceaux de fibres de renforcement (20) à la largeur moyenne de faisceaux de fibres de la portion de faisceaux de fibres de renforcement (20) se situe entre 2 et 500, de préférence entre 3 et 100, et, en particulier de préférence, entre 4 et 20.

17. Matériau composite à matrice céramique (24), renforcé par des faisceaux de fibres (20, 21) selon au moins une des revendications 1 à 16, **caractérisé en ce que** le rapport de la longueur moyenne (4) de faisceaux de fibres de la portion de faisceaux de fibres de matrice (21) à la largeur moyenne de faisceaux de fibres de la portion de faisceaux de fibres de matrice (21) se situe entre 2 et 500, de préférence entre 3 et 100, et, en particulier de préférence, entre 4 et 20.

18. Matériau composite à matrice céramique (24), renforcé par des faisceaux de fibres (20, 21) selon au moins une des revendications 1 à 17, **caractérisé en ce que** le rapport moyen longueur/largeur/hauteur de la portion de faisceaux de fibres de renforcement (20) est compris entre 2 et 50 000, de préférence entre 5 et 2 000, et, en particulier de préférence, entre 10 et 100.

19. Matériau composite à matrice céramique (24), renforcé par des faisceaux de fibres (20, 21) selon au moins une des revendications 1 à 18, **caractérisé en ce que** le rapport moyen longueur/largeur/hauteur de la portion de faisceaux de fibres de matrice (21) est compris entre 2 et 50 000, de préférence entre 10 et 5 000 et, en particulier de préférence, entre 30 et 500.

20. Matériau composite à matrice céramique (24), renforcé par des faisceaux de fibres (20, 21) selon au moins une des revendications 1 à 19,
**caractérisé en ce que**
le rapport de la masse de la portion de faisceaux de fibres de matrice (21) à la masse des faisceaux de fibres entiers se situe entre 0,2 et 0,33.

21. Matériau composite à matrice céramique (24), renforcé par des faisceaux de fibres (20, 21) selon au moins une des revendications 1 à 20, **caractérisé en ce que** la largeur de bande à demi-hauteur de pic (8) de la distribution (3) des longueurs de faisceaux de fibres de la portion de faisceaux de fibres de renforcement (20) est comprise entre 0,01 mm et 15 mm, de préférence entre 0,1 et 12 mm, et, en particulier de préférence, entre 1 et 8 mm.

22. Matériau composite à matrice céramique (24), renforcé par des faisceaux de fibres (20, 21) selon au moins une des revendications 1 à 21, **caractérisé en ce que** la largeur de bande à demi-hauteur de pic (7) de la distribution des longueurs des faisceaux de fibres (2) de la portion de faisceaux de fibres de matrice (21) est comprise entre 0,01 mm et 5 mm, de préférence entre 0,1 et 4 mm, en particulier de préférence entre 1 et 3,5 mm.

23. Procédé pour fabriquer des matériaux composites à matrice céramique (24) renforcés par des faisceaux de fibres (20,21),
**caractérisé en ce que**
deux différentes portions de faisceaux de fibres (20,21), une portion de faisceaux de fibres de renforcement (20) et une portion de faisceaux de fibres de matrice (21) à longueur moyenne de faisceaux de fibres différente (4,5) sont utilisés, au cours du processus de fabrication, en tant que matériaux de départ dans lequel
- la portion de faisceaux de fibres de renforcement (20) présente une longueur moyenne de faisceaux de fibres comprise entre 4 mm et 20 mm et la portion de faisceaux de fibres de matrice (21) présente une longueur moyenne de faisceaux de fibres comprise entre 0,2 mm et 5 mm,
- le rapport de la masse de la portion de faisceaux de fibres de matrice (21) à la masse des faisceaux de fibres entiers se situe entre 0,1 et 0,33,
- la portion de faisceaux de fibres de renforcement et la portion de faisceaux de fibres de matrice sont séparées par un minimum (6) dans la distribution de faisceaux de fibres complète (1) pour ce qui est de la longueur des faisceaux de fibres,
- la portion de faisceaux de fibres de renforcement (20) présente une largeur moyenne de faisceaux de fibres comprise entre 0,02 mm et 5 mm et la portion de faisceaux de fibres de matrice (21) présente une largeur moyenne de faisceaux de fibres comprise entre 0,02 mm et 2 mm, et
- le rapport de la longueur moyenne de faisceaux de fibres de la portion de faisceaux de fibres de renforcement à la longueur moyenne de faisceaux de fibres de la portion de faisceaux de fibres de matrice se situe entre 2,1 et 10, et
- le rapport de la longueur moyenne de faisceaux de fibres à la largeur moyenne de faisceaux de fibres de la portion de faisceaux de fibres de renforcement et de la portion de faisceaux de fibres de matrice se situe entre 2 et 100, et ce faisceau de fibres sera, dans une étape supplémentaire, mélangé à au moins un liant carbonisable du groupe des résines et des poix, et comprimé, et dans une étape supplémentaire le corps moulé ainsi formé est infiltré d'un polymère pyrolysable.

24. Procédé pour fabriquer des matériaux composites à matrice céramique (24) renforcés par des faisceaux de fibres (20,21) selon la revendication 23, **caractérisé en ce qu'**en plus des polymères, des charges supplémentaires sont infiltrées.

25. Procédé pour fabriquer des matériaux composites à matrice céramique (24) renforcés par des faisceaux de fibres (20,21) selon la revendication 23, **caractérisé en ce que** les deux portions différentes de faisceaux de fibres (20,21) sont mélangées à d'autres composants, pendant un processus de mélange, pour fabriquer le matériau composite.

26. Procédé pour fabriquer des matériaux composites à matrice céramique (24) renforcés par des faisceaux de fibres (20,21) selon au moins une des revendications 23 à 25, **caractérisé en ce qu'**au moins une partie des faisceaux de fibres (20,21) présente au moins une couche protectrice.

27. Procédé pour fabriquer des matériaux composites à matrice céramique (24) renforcés par des faisceaux de fibres (20,21) selon au moins une des revendications 23 à 26, **caractérisé en ce que** l'on n'utilise lors de la fabrication que des faisceaux en carbone et en graphite.

28. Procédé pour fabriquer des matériaux composites à matrice céramique (24) renforcés par des faisceaux de fibres (20,21) selon au moins une des revendications 23 à 27, **caractérisé en ce qu'**après la procédure de mélange, le mélange est comprimé.

29. Procédé pour fabriquer des matériaux composites à matrice céramique (24) renforcés par des faisceaux de fibres (20,21) selon la revendication 28, **caractérisé en ce que** la compression se fait à température élevée.

30. Procédé pour fabriquer des matériaux composites à matrice céramique (24) renforcés par des faisceaux de fibres (20,21) selon la revendication 28 ou 29, **caractérisé en ce qu'**après la compression, le corps de forme subit un traitement thermique au-dessus de la température de durcissement des liants de résine contenus dans le mélange.

31. Procédé pour fabriquer des matériaux composites à matrice céramique (24) renforcés par des faisceaux de fibres (20,21) selon au moins une des revendications 23 à 30, **caractérisé en ce que**, dans une étape de procédé supplémentaire, les liants sont carbonisés.

32. Procédé pour fabriquer des matériaux composites à matrice céramique (24) renforcés par des faisceaux de fibres (20,21) selon au moins une quelconque des revendications 23 à 31, **caractérisé en ce que** le procédé comprend, comme étape de procédé supplémentaire, la graphitisation à des températures au-dessus de 2 000 °C.

33. Procédé pour fabriquer des matériaux composites à matrice céramique (24) renforcés par des faisceaux de fibres (20,21) selon l'une quelconque des revendications 23 à 32, **caractérisé en ce que**, dans une étape de procédé finale, l'on effectue un siliciage.

34. Procédé pour fabriquer des matériaux composites à matrice céramique (24) renforcés par des faisceaux de fibres (20,21) selon au moins une quelconque des revendications 23 à 33, **caractérisé en ce que** la longueur moyenne (5) des faisceaux de fibres de la portion de faisceaux de fibres de renforcement (20) utilisée se situe entre 4 mm et 20 mm, de préférence entre 5 mm et 16 mm, et, en particulier, de préférence, entre 6 mm et 12 mm.

35. Procédé pour fabriquer des matériaux composites à matrice céramique (24) renforcés par des faisceaux de fibres (20,21) selon au moins une des revendications 23 à 34, **caractérisé en ce que** la longueur moyenne (4) des faisceaux de fibres de la portion de faisceaux de fibres de matrice (21) utilisée se situe entre 0,2 mm et 5 mm, de préférence entre 0,5 mm et 4 mm, et, en particulier, de préférence, entre 1 mm et 3,5 mm.

36. Procédé pour fabriquer des matériaux composites à matrice céramique (24) renforcés par des faisceaux de fibres (20, 21) selon au moins une des revendications 23 à 35, **caractérisé en ce que** le rapport de la longueur moyenne (5) de faisceaux de fibres de la portion de faisceaux de fibres de renforcement (20) utilisée à la longueur moyenne (4) de faisceaux de fibres de la portion de faisceaux de fibres de matrice (21) utilisée est compris entre 1,5 et 10, de préférence entre 1,8 et 7, et, en particulier, de préférence, entre 2,1 et 5.

37. Procédé pour fabriquer des matériaux composites à matrice céramique (24) renforcés par des faisceaux de fibres (20, 21) selon au moins une des revendications 23 à 36, **caractérisé en ce que** le rapport moyen longueur/largeur/ hauteur de la portion de faisceaux de fibres de renforcement (20) utilisée est compris entre 2 et 50 000, de préférence entre 5 et 2 000, et, en particulier, de préférence entre 10 et 100.

38. Procédé pour fabriquer des matériaux composites à matrice céramique (24) renforcés par des faisceaux de fibres (20, 21) selon au moins une des revendications 23 à 37, **caractérisé en ce que** le rapport moyen longueur/largeur/ hauteur de la portion de faisceaux de fibres de matrice (21) utilisée est compris entre 2 et 50 000, de préférence entre 10 et 5 000, et, en particulier, de préférence entre 30 et 500.

39. Procédé pour fabriquer des matériaux composites à matrice céramique (24) renforcés par des faisceaux de fibres (20,21) selon au moins une des revendications 23 à 38, **caractérisé en ce que** la portion massique des faisceaux de fibres (20,21) introduits lors du processus de mélange des deux portions de faisceaux de fibres est en tout de 50 à 99 % de la masse totale du mélange, de préférence de 60 à 90 % et, en particulier, de préférence, de 65 à 80 % de la masse totale du mélange.

40. Procédé pour fabriquer des matériaux composites à matrice céramique (24) renforcés par des faisceaux de fibres (20,21) selon au moins une des revendications 23 à 39, **caractérisé en ce que** la portion massique des faisceaux de fibres introduits lors du processus de mélange de la portion de faisceaux de fibres de renforcement (20) est de 20 à 80 % de la masse totale du mélange, de préférence de 35 à 65 % et, en particulier, de préférence, de 42 à 55 % de la masse totale du mélange.

41. Procédé pour fabriquer des matériaux composites à matrice céramique (24) renforcés par des faisceaux de fibres (20,21) selon au moins une des revendications 23 à 40,
**caractérisé en ce que**
la portion massique des faisceaux de fibres introduits lors du processus de mélange de la portion de faisceaux de fibres de matrice (21) est de 10 à 40 % de la masse totale du mélange, de préférence de 15 à 35 % et, en particulier, de préférence, de 20 à 30 % de la masse totale du mélange.

42. Procédé pour fabriquer des matériaux composites à matrice céramique (24) renforcés par des faisceaux de fibres (20,21) selon au moins une des revendications 23 à 41, **caractérisé en ce que** le rapport de la masse de la portion de faisceaux de fibres de matrice (21) utilisée à la masse des faisceaux de fibres entiers utilisés se situe entre 0,1 et 0,8, de préférence entre 0,2 et 0,5 et, en particulier, de préférence, entre 0,27 et 0,33.

43. Utilisation d'un matériau composite à matrice céramique (24), renforcé par des faisceaux de fibres (20,21), selon au moins une des revendications 1 à 22, comme pièces de turbines à gaz telles que des aubes de turbine, pièces de brûleurs, buses et pièces de ces derniers, tubes à gaz chauds, sondes de mesure, tubes-enveloppe pour sondes, matériaux de friction tels que des disques de freins et patins de freins pour aéronefs, véhicules ferroviaires et véhicules poids lourds, boucliers thermiques, composants de protection thermique de vaisseaux spatiaux et de groupes motopropulseurs, composants de paliers-glisseurs et éléments-glisseurs, composants-support de miroirs, d'antennes et de réflecteurs, composants de corps spatiaux, grilles d'incendie et composants d'échangeurs thermiques.
